# FASCICULE DE BREVET EUROPEEN

(11) **EP 2 753 466 B1**
(45) Date de publication et mention de la délivrance du brevet: **01.11.2017**
(21) Numéro de dépôt: 12767035.4
(22) Date de dépôt: 06.09.2012
(51) Int. Cl.: B29C 70/24, F01D 5/28, F01D 9/04, B29L 31/08

(54) **PROCEDE DE FABRICATION D'UN SECTEUR DE DISTRIBUTEUR DE TURBINE OU REDRESSEUR DE COMPRESSEUR EN MATERIAU COMPOSITE POUR TURBOMACHINE ET TURBINE OU COMPRESSEUR INCORPORANT UN DISTRIBUTEUR OU UN REDRESSEUR FORME DE TELS SECTEURS**
VERFAHREN ZUR HERSTELLUNG EINES ABSCHNITTS EINER TURBINENDÜSE ODER KOMPRESSORSTÄNDERSCHAUFEL AUS EINEM VERBUNDWERKSTOFF FÜR EINEN TURBINENMOTOR SOWIE TURBINE ODER KOMPRESSOR MIT EINER DÜSE ODER STATORSCHAUFEL AUS DIESEN ABSCHNITTEN
METHOD FOR MANUFACTURING A SECTOR OF A TURBINE NOZZLE OR COMPRESSOR STATOR VANE MADE OF A COMPOSITE MATERIAL FOR A TURBINE ENGINE, AND TURBINE OR COMPRESSOR INCLUDING A NOZZLE OR STATOR VANE CONSISTING OF SAID SECTORS

(30) Priorité: 07.09.2011 FR 1157925
(43) Date de publication de la demande: 16.07.2014
(73) Titulaire: SNECMA, 75015 Paris (FR); HERAKLES, 33185 Le Haillan (FR)
(72) Inventeur: BEAUJARD, Antoine, Jean-Philippe, F-77550 Moissy-Cramayel Cedex (FR); FREMONT, Elric, Georges, André, F-33700 Merignac (FR)
(74) Mandataire: Desormiere, Pierre-Louis
(86) Numéro de dépôt international: PCT/FR2012/051994
(87) Numéro de publication internationale: WO 2013/034857

(56) Documents cités:
- EP-A1- 1 607 581
- WO-A1-2010/061140
- WO-A1-2010/116066
- WO-A1-2011/080443
- FR-A1- 2 664 518
- FR-A1- 2 745 808
- US-A1- 2007 154 318
- US-B1- 6 196 794
- US-B1- 6 227 798

## Description

### Arrière-plan de l'invention

L'invention se rapporte aux turbines ou compresseurs pour turbomachines, notamment pour turbomoteurs aéronautiques ou turbines industrielles.

L'amélioration des performances des turbomachines et la réduction de leurs émissions polluantes conduisent à envisager des températures de fonctionnement de plus en plus élevées.

Pour des éléments de parties chaudes de turbomachines, il a donc été proposé d'utiliser des matériaux composites à matrice céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans le document WO 2010/146288.

Un distributeur de turbine ou redresseur de compresseur métallique traditionnel est formé de plusieurs secteurs assemblés, chaque secteur comprenant une plate-forme intérieure, une plate-forme extérieure et une pluralité de pales s'étendant entre les plates-formes intérieure et extérieure et solidaires de celles-ci. Les plates-formes intérieure et extérieure délimitent la veine d'écoulement de gaz ou d'air dans le distributeur ou redresseur. Du côté extérieur, les plates-formes extérieures des secteurs sont solidaires de pattes permettant le montage du distributeur de turbine ou redresseur de compresseur dans un carter.

Le document US 6196794 décrit l'assemblage d'aubes monopales en matériau composite.

### Objet et résumé de l'invention

L'invention a pour but de proposer un procédé permettant de fabriquer un secteur de distributeur de turbine ou redresseur de compresseur en matériau composite reprenant les différentes fonctions d'un secteur métallique, notamment les fonctions de délimitation de veine d'écoulement de gaz ou d'air par des plates-formes intérieure et extérieure et d'accrochage dans un carter.

Ce but est atteint grâce à un procédé comprenant :
- la réalisation d'aubes de distributeur ou de compresseur unitaires mono-pales ayant chacune une plate-forme intérieure, une plate-forme extérieure et une pale s'étendant entre les plates-formes intérieure et extérieure et solidaire de celles-ci, la réalisation de chaque aube de distributeur comprenant :
   - la réalisation par tissage tridimensionnel d'une ébauche fibreuse en une seule pièce,
   - la mise en forme de l'ébauche fibreuse pour obtenir une préforme fibreuse en une seule pièce ayant une première partie formant préforme de pale, une deuxième partie formant préforme de plate-forme intérieure, et une troisième partie formant préforme de plate-forme extérieure, et
   - la densification partielle de la préforme par une matrice pour obtenir une aube en matériau composite ayant un renfort fibreux formé par la préforme et densifié par une matrice, et formant une seule pièce avec plates-formes intérieure et extérieure intégrées,
   - l'usinage de l'aube
- l'assemblage et la liaison de plusieurs aubes entre elles pour former un secteur multi-pales de distributeur de turbine ou de redresseur de compresseur en matériau composite, la liaison étant réalisée par un processus comprenant au moins une étape de liaison par co-densification par une matrice d'aubes assemblées à un stade intermédiaire de densification.

Dans le cas d'un distributeur de turbine ou redresseur de compresseur en matériau composite à matrice céramique, l'assemblage des aubes usinées peut comprendre une étape de collage pré-céramique.

Avantageusement, la plate-forme extérieure ou intérieure d'une première aube comprend une plate-forme extérieure ou intérieure de constitution de veine et est reliée à une plate-forme extérieure ou intérieure d'une deuxième aube voisine au moins en partie le long d'au moins une zone de liaison s'étendant sur une partie de la surface extérieure de la plate-forme extérieure de constitution de veine de la première aube et/ou sur une partie de la surface intérieure de la plate-forme intérieure de constitution de veine de la première aube.

Chaque aube peut être réalisée avec une plate-forme extérieure ayant une partie formant plate-forme extérieure de constitution de veine et une partie formant des pattes d'accrochage, la plate-forme extérieure de constitution de veine ainsi que les pattes d'accrochage s'étendant d'un côté et de l'autre de la pale et les pattes d'accrochage étant situées à l'extérieur de la plate-forme extérieure de constitution de veine.

En variante, chaque aube peut être est réalisée avec une plate-forme extérieure ayant une partie formant plate-forme extérieure de constitution de veine, d'un côté de la pale, et une partie formant des pattes d'accrochages de l'autre côté de la pale, et l'assemblage entre deux aubes voisines est réalisé en engageant les pattes d'accrochage d'une des deux aubes du côté extérieur de la plate-forme extérieure de constitution de veine de l'autre des deux aubes.

En variante,
- l'on réalise des premières aubes ayant chacune une plate-forme intérieure, une plate-forme extérieure formant plate-forme extérieure de constitution de veine et une pale s'étendant entre les plates-formes intérieure et extérieure et solidaire de celles-ci,
- l'on réalise des deuxièmes aubes ayant chacune une plate-forme intérieure, une plate-forme extérieure formant pattes d'accrochage et une pale s'étendant entre les plates-formes intérieure et extérieure et solidaire de celles-ci, et
- l'on forme un secteur en assemblant des premières aubes en alternance avec des deuxièmes aubes, les pattes d'accrochage d'une deuxième aube étant engagées du côté extérieur de la plate-forme extérieure de constitution de veine d'une première aube.

Par ailleurs, chaque aube peut être réalisée avec une plate-forme intérieure ayant une partie formant plate-forme intérieure de constitution de veine et une partie formant des becquets ou crochets, la plate-forme intérieure de constitution de veine ainsi que les becquets ou crochets s'étendant d'un côté et de l'autre de la pale et les becquets ou crochets étant situés du côté intérieur de la plate-forme intérieure de constitution de veine.

En variante, chaque aube peut être réalisée avec une plate-forme intérieure ayant une partie formant plate-forme intérieure de constitution de veine, d'un côté de la pale, et une partie formant des crochets ou becquets, de l'autre côté de la pale, et l'assemblage entre deux aubes voisines est réalisé en engageant les crochets ou becquets de l'une des deux aubes du côté intérieur de la plate-forme intérieure de constitution de veine de l'autre des deux aubes.

En variante,
- l'on réalise des premières aubes ayant chacune une plate-forme intérieure formant plate-forme intérieure de constitution de veine, une plate-forme extérieure et une pale s'étendant entre les plates-formes intérieure et extérieure et solidaire de celles-ci,
- l'on réalise des deuxièmes aubes ayant chacune une plate-forme intérieure formant becquets ou crochets, une plate-forme extérieure et une pale s'étendant entre les plates-formes intérieure et extérieure et solidaire de celles-ci, et
- l'on forme un secteur en assemblant des premières aubes en alternance avec des deuxièmes aubes, les crochets ou becquets d'une deuxième aube étant engagés du côté intérieur de la plate-forme intérieure de constitution de veine d'une première aube.

Avantageusement, dans la direction longitudinale de l'ébauche correspondant à la direction longitudinale d'une aube à réaliser, l'ébauche fibreuse est tissée avec :
- un premier ensemble de plusieurs couches de fils qui sont liées entre elles au moins partiellement pour former une première partie de l'ébauche destinée à former la préforme de pale, et
- un deuxième ensemble de plusieurs couches de fils qui sont liées entre elles au moins partiellement pour former une deuxième partie de l'ébauche destinée à former la préforme de plate-forme intérieure et pour former une troisième partie de l'ébauche destinée à former la préforme de plate-forme extérieure,
- les fils du premier ensemble de couches de fils n'étant pas liés aux fils du deuxième ensemble de couches de fils, et
- le premier ensemble de couches de fils étant traversé par le deuxième ensemble de couches de fils en des premier et deuxième emplacements de traversée correspondant aux emplacements des préformes de plate-forme intérieure et de plate-forme extérieure, respectivement.

L'ébauche fibreuse peut alors être tissée avec un deuxième ensemble continu de couches de fils et la mise en forme de l'ébauche fibreuse comprend :
- l'élimination par découpe de parties du deuxième ensemble de couches de fils extérieures à la deuxième et à la troisième partie de l'ébauche, et
- le déploiement de parties non éliminées du deuxième ensemble de couches de fils de part et d'autre du premier ensemble de couches de fils au niveau des premier et deuxième emplacements de traversée.

Dans un premier mode de réalisation, le procédé comprend la réalisation d'aubes ayant une plate-forme extérieure avec une partie formant plate-forme extérieure de constitution de veine et une partie formant des pattes d'accrochage situées du côté extérieur de la plate-forme extérieure de constitution de veine, et l'ébauche fibreuse est tissée dans ladite direction longitudinale avec, en outre :
- un troisième ensemble de couches de fils qui sont liées entre elles au moins partiellement pour former une quatrième partie de l'ébauche correspondant à la préforme de pattes d'accrochage,
- les fils du premier ensemble de couches de fils n'étant pas liés aux fils du troisième ensemble de couches de fils, et
- le premier ensemble de couches de fils est traversé par le troisième ensemble de couches de fils en un troisième emplacement de traversée correspondant à un emplacement de préforme de pattes d'accrochage.

L'ébauche fibreuse peut alors être tissée avec un troisième ensemble continu de couches de fils et la mise en forme de l'ébauche comprend :
- l'élimination par découpe de parties du troisième ensemble de couches de fils extérieures à la quatrième partie de l'ébauche, et
- le déploiement de parties non éliminées du troisième ensemble de couches de fils de part et d'autre du premier ensemble de couches de fils au niveau du troisième emplacement de traversée.

Selon une particularité du premier mode de réalisation, le procédé comprend la réalisation d'aubes ayant une plate-forme intérieure avec une partie formant plate-forme intérieure de constitution de veine et une partie formant des crochets ou becquets situés du côté intérieur de la plate-forme intérieure de constitution de veine, et :
- les couches de fils du troisième ensemble de couches de fils sont au moins partiellement liées entre elles pour former une cinquième partie de l'ébauche fibreuse correspondant à une préforme de crochets ou becquets, et
- le premier ensemble de couches de fils est en outre traversé par le troisième ensemble de couches de fils en un quatrième emplacement de traversée correspondant à un emplacement de préforme de crochets ou becquets.

L'ébauche fibreuse peut alors être tissée avec un troisième ensemble continu de couches de fils et la mise en forme de l'ébauche comprend :
- l'élimination par découpe de parties du troisième ensemble de couches de fils extérieures à la quatrième et à la cinquième partie de l'ébauche, et
- le déploiement de parties non éliminées du troisième ensemble de couches de fils de part et d'autre du premier ensemble de couches de fils au niveau des troisième et quatrième emplacements de traversée.

Dans un deuxième mode de réalisation, le procédé comprend la réalisation d'aubes ayant une plate-forme extérieure avec une partie formant plate-forme extérieure de constitution de veine et une partie formant des pattes d'accrochage situées du côté extérieur de la plate-forme extérieure de constitution de veine, et
- l'ébauche fibreuse est tissée en ménageant une zone de déliaison au sein du premier ensemble de couches de fils, dans le prolongement de la première partie de l'ébauche, vers l'extérieur par rapport au deuxième emplacement de traversée, et
- la mise en forme de l'ébauche comprend le déploiement de parties du premier ensemble de couches de fils situées de part et d'autre de la zone de déliaison pour former une préforme de pattes d'accrochage.

Selon une particularité du deuxième mode de réalisation, le procédé comprend la réalisation d'aubes ayant une plate-forme intérieure avec une partie formant plate-forme intérieure de constitution de veine et une partie formant des crochets ou becquets situés du côté intérieur de la plate-forme intérieure de constitution de veine, et
- l'ébauche fibreuse est tissée en ménageant une deuxième zone de déliaison au sein du premier ensemble de couches de fils, dans le prolongement de la première partie de l'ébauche, vers l'intérieur par rapport au premier emplacement de traversée, et
- la mise en forme de l'ébauche comprend le déploiement de parties du premier ensemble de couches de fils situées de part et d'autre de la deuxième zone de déliaison pour former une préforme de crochets ou becquets.

Dans un troisième mode de réalisation, le procédé comprend la réalisation d'aubes ayant une plate-forme extérieure avec une partie formant plate-forme extérieure de constitution de veine et une partie formant des pattes d'accrochage situées du côté extérieur de la plate-forme extérieure de constitution de veine, et
- au deuxième emplacement de traversée du premier ensemble de couches de fils par le deuxième ensemble de couches de fils, les sorties de la traversée sur deux faces opposées du premier ensemble de couches de fils sont décalées l'une par rapport à l'autre dans la direction longitudinale de l'ébauche, et
- la mise en forme de l'ébauche comprend le déploiement de parties du deuxième ensemble de couches de fils s'étendant à partir de chaque sortie de traversée sur lesdites faces opposées du premier ensemble de couches de fils pour former respectivement une préforme de plate-forme extérieure et une préforme de pattes d'accrochage décalées l'une par rapport à l'autre en direction longitudinale.

Selon une particularité du troisième mode de réalisation, le procédé comprend la réalisation d'aubes ayant une plate-forme intérieure avec une partie formant plate-forme intérieure de constitution de veine et une partie formant des crochets ou becquets situés du côté intérieur de la plate-forme intérieure de constitution de veine, et
- au premier emplacement de traversée du premier ensemble de couches de fils par le deuxième ensemble de couches de fils, les sorties de la traversée sur deux faces opposées du premier ensemble de couches de fils sont décalées l'une par rapport à l'autre dans la direction longitudinale de l'ébauche, et
- la mise en forme de l'ébauche comprend le déploiement de parties du deuxième ensemble de couches de fils s'étendant à partir de chaque sortie de traversée du premier emplacement de traversée sur lesdites faces opposées du premier ensemble de couches de fils pour former respectivement une préforme de plate-forme intérieure de constitution de veine et une préforme de crochets ou becquets décalées l'une par rapport à l'autre en direction longitudinale.

L'invention vise aussi une turbine de turbomachine ayant un carter de turbine et un distributeur de turbine en matériau CMC, le distributeur de turbine comprenant des secteurs de distributeur obtenus par un procédé tel que défini ci-avant. Le distributeur est avantageusement monté dans le carter de turbine au moyen de pattes d'accrochage que présentent les plates-formes extérieures d'aubes.

L'invention vise encore un compresseur de turbomachine ayant un carter de compresseur et au moins un redresseur de compresseur en matériau composite, le redresseur de compresseur comprenant des secteurs de redresseur obtenus par un procédé tel que défini ci-avant. Le redresseur est avantageusement monté dans le carter de compresseur au moyen de pattes d'accrochage que présentent les plates-formes extérieures d'aubes.

Avantageusement le distributeur ou le redresseur supporte avantageusement un anneau support de matériau abradable par l'intermédiaire des crochets que présentent les plates-formes intérieures d'aubes.

L'invention est remarquable en ce que la fabrication de secteurs de distributeur ou de compresseur en matériau composite à partir d'aubes unitaires mono-pales permet de simplifier la réalisation des préformes fibreuses et leur moulage en comparaison avec une préforme complexe d'un secteur de distributeur ou de redresseur multi-pales.

L'invention est remarquable aussi en ce que l'accrochage du distributeur ou de redresseur dans le carter de turbine ou de compresseur peut être réalisé au moyen de pattes d'accrochage associées à des aubes unitaires, et les efforts exercés sur les pales peuvent être repris par les pattes d'accrochage sans induire d'efforts excessifs au niveau des liaisons entre les aubes.

L'invention vise encore une turbomachine ayant une turbine et/ou un compresseur tels que définis ci-avant.

### Brève description des dessins

L'invention sera mieux comprise à la lecture de la description faites ci-après, à titre indicatif mais non limitatif, en référence aux dessins annexés sur lesquels :
- la figure 1 est une vue très schématique partielle en demi-coupe axiale d'une turbine basse pression de turbomachine comprenant un distributeur de turbine en matériau CMC ;
- la figure 2 est une vue schématique en perspective d'un secteur du distributeur de la figure 1 ;
- la figure 3 est une vue schématique en perspective d'un secteur de l'anneau support de matériau abradable de la figure 1 ;
- la figure 4 est une vue en perspective d'une aube de distributeur mono-pale constitutive d'un secteur de distributeur en matériau CMC tel que celui de la figure 2, selon un mode de réalisation de l'invention ;
- les figures 5 à 8 illustrent très schématiquement des étapes successives d'un procédé de réalisation d'une préforme fibreuse pour une aube de distributeur telle que celle de la figure 4 ;
- la figure 9 indique des étapes successives d'un procédé de fabrication d'un secteur de distributeur tel que celui de la figure 2 ;
- la figure 10 indique des étapes successives d'un autre procédé de fabrication d'un secteur de distributeur tel que celui de la figure 2 ;
- la figure 11 est une vue en perspective d'une aube de distributeur mono-pale constitutive d'un secteur de distributeur en matériau CMC, selon un mode de réalisation de l'invention ;
- les figures 12 à 15 illustrent très schématiquement des étapes successives d'un procédé de réalisation d'une préforme fibreuse pour une aube de distributeur telle que celle de la figure 11 ;
- la figure 16 est une vue schématique en perspective d'un secteur de distributeur obtenu par assemblage d'aubes telles que celle de la figure 11 ;
- la figure 17 est une vue en perspective d'une aube de distributeur mono-pale constitutive d'un secteur de distributeur en matériau CMC, selon un mode de réalisation de l'invention ;
- les figures 18 à 21 illustrent très schématiquement des étapes successives d'un procédé de réalisation d'une préforme fibreuse pour une aube de distributeur telle que celle de la figure 17 ;
- la figure 22 est une vue schématique en perspective d'un secteur de distributeur obtenu par assemblage d'aubes telles que celle de la figure 19 ;
- la figure 23 montre très schématiquement le principe d'assemblage de deux aubes telles que celle de la figure 17 lors de la fabrication d'un secteur de distributeur ;
- la figure 24 est une vue en perspective de deux aubes de distributeur mono-pales constitutives d'un secteur de distributeur en matériau CMC, selon un mode de réalisation de l'invention ;
- les figure 25 à 28 illustrent très schématiquement des étapes successives d'un procédé de réalisation d'une préforme fibreuse pour une aube de distributeur telle que l'une des aubes de la figure 24 ;
- la figure 29 est une vue schématique en perspective d'un secteur de distributeur obtenu par assemblage d'aubes telles que celles de la figure 24 ;
- la figure 30 montre très schématiquement le principe d'assemblage de deux aubes telles que celles de la figure 24 lors de la fabrication d'un secteur de distributeur ;
- la figure 31 est une vue très schématique partielle en coupe montrant une variante de l'accrochage d'un distributeur dans un carter de turbine ; et
- la figure 32 est une vue très schématique partielle en demi-coupe axiale d'un compresseur de turbomachine comprenant un redresseur de compresseur en matériau composite.

### Description détaillée de modes de réalisation

### Définitions

Dans tous le texte, on désigne par « plate-forme extérieure » ou « plate-forme intérieure », aussi bien une plate-forme bi-fonctionnelle ayant une partie formant plate-forme de constitution de veine et une partie formant pattes d'accrochage ou crochets ou becquets, qu'une plate-forme mono-fonctionnelle limitée à l'une de ces parties.

Par « plate-forme de constitution de veine » on désigne un élément formant partie d'une paroi extérieure ou intérieure délimitant la veine de circulation de gaz dans une turbine au niveau d'un distributeur de turbine ou la veine de circulation d'air dans un compresseur au niveau d'un redresseur de compresseur.

### Application à une turbine de turbomachine

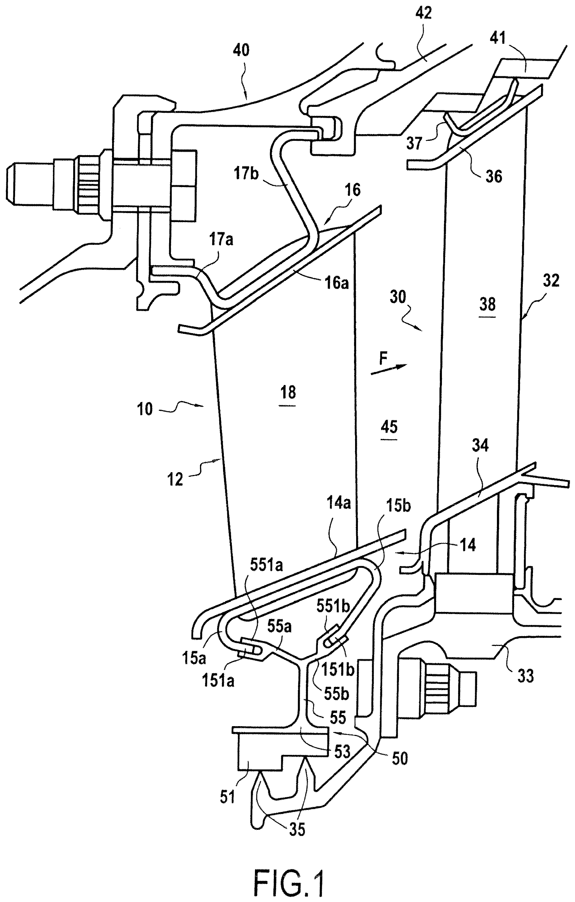

Une turbine basse pression (BP) multi-étages d'une turbomachine, par exemple un turbomoteur aéronautique, telle que montrée partiellement sur la figure 1, comprend une pluralité de distributeurs fixes 10 qui alternent avec des roues mobiles 30 dans le sens d'écoulement du flux gazeux dans la turbine (flèche F) et qui sont montés dans un carter de turbine 40.

Chaque roue mobile 30 comprend une pluralité d'aubes 32 ayant une plate-forme intérieure 34, une plate-forme extérieure ou talon 36 et une pale 38 s'étendant entre les plates-formes 34 et 36 et liée à celles-ci. Du côté intérieur de la plate-forme 34, l'aube se prolonge par un pied engagé dans un logement d'un disque 33. Du côté extérieur, le talon 36 supporte des léchettes 37 en regard d'un matériau abradable 41 porté par un anneau sectorisé 42, pour assurer l'étanchéité aux sommets des aubes 32.

Dans tout le présent texte, les termes "intérieur" et "extérieur" sont utilisés en référence à la position ou orientation par rapport à l'axe de la turbine.

Les aubes 32 peuvent être des aubes métalliques traditionnelles ou des aubes en matériau CMC obtenues par exemple comme décrit dans les documents précités WO 2010/061140, WO 2010/116 066 ou WO 2011/080443.

Au moins l'un des distributeurs, tel que le distributeur 10 de la figure 1, est formé par réunion de plusieurs secteurs annulaires de distributeur en matériau CMC.

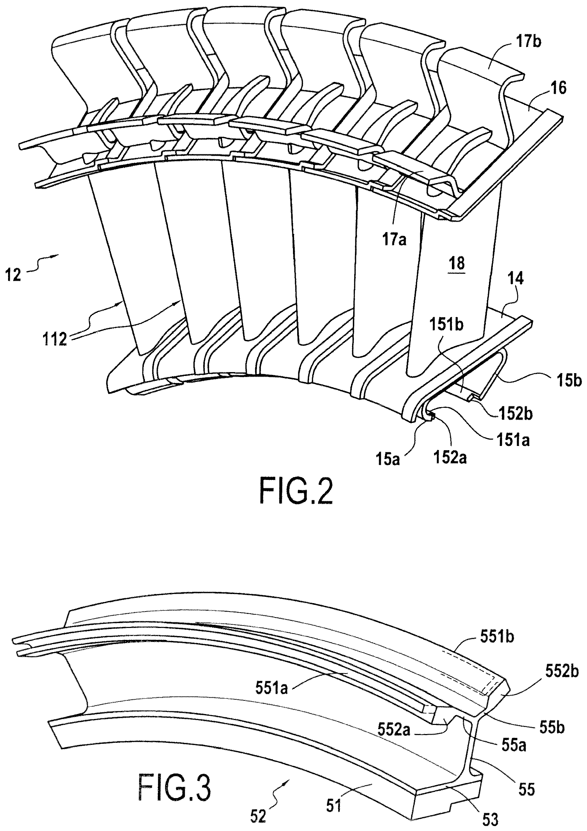

Chaque secteur de distributeur 12 (figures 1 et 2) comprend une plate-forme intérieure 14, une plate-forme extérieure 16 et une pluralité de pales 18 s'étendant entre les plates-formes 14, 16 et solidaires de celles-ci. Les plates-formes 14 et 16 comprennent des parties 14a, 16a formant plates-formes de constitution de veine intérieure et extérieure. Les faces extérieures des plates-formes 14a, 34 et les faces intérieures des plates-formes 16a, 36 délimitent la veine 45 d'écoulement de flux gazeux dans la turbine.

Du côté extérieur, font saillie à partir de la plate-forme extérieure 16a une patte d'accrochage amont 17a et une patte d'accrochage aval 17b sous forme de secteurs annulaires à section sensiblement en forme de S. Les pattes d'accrochage 17a, 17b s'étendent sur le même angle que la plate-forme 16a. Les parties terminales des pattes 17a, 17b sont orientées respectivement vers l'amont et vers l'aval et sont engagées dans des crochets portés par le carter 40 afin de monter le distributeur 10 dans le carter 40 de façon similaire à un distributeur de turbine métallique.

Dans tout le texte, les termes "amont" et "aval" sont utilisés en référence au sens d'écoulement de flux gazeux dans la turbomachine.

Du côté intérieur, font saillie sous la plate-forme intérieure 14a des crochets amont 15a et aval 15b qui sont sous forme de secteurs annulaires à section sensiblement en forme de C, et sont repliés respectivement vers l'aval et vers l'amont.

Les crochets 15a et 15b supportent et maintiennent en position axiale un anneau métallique sectorisé 50 qui supporte un matériau abradable 51 en regard de léchettes 35 portées par le disque 33 pour assurer l'étanchéité de la veine 50 du côté intérieur. L'anneau métallique 50 est formé de secteurs juxtaposés 52 constituant chacun un cartouche d'abradable (figures 1 et 3). Du côté extérieur, chaque secteur d'anneau 52 comprend une base 53 à partir de laquelle fait saillie vers l'extérieur une partie 55 formant des pattes d'accrochage amont 55a et aval 55b. Les pattes d'accrochage 55a, 55b sont sous forme de secteurs annulaires qui s'étendent ici sur un même angle que les secteurs d'anneau 52. Dans l'exemple illustré, l'engagement mutuel entre les crochets 15a et les pattes d'accrochage 55a, d'une part, et entre les crochets 15b et les pattes d'accrochage 55b, d'autre part, est réalisé par engagement des parties terminales 151a, 151b des crochets 15a, 15b dans des glissières respectives 551a, 551b formées aux extrémités des pattes d'accrochage 55a, 55b.

L'engagement est réalisé par coulissement en direction circonférentielle, jusqu'à venue en contact de butées d'arrêt afin d'aligner radialement un secteur de distributeur 12 avec un secteur d'anneau 52. Les butées sont par exemple réalisées par formation d'encoches 152a, 152b à une extrémité circonférentielle des parties terminales 151a, 151b des crochets 15a, 15b (figure 2) et fermeture des glissières 551a, 551b par des parties pleines 552a, 552b à une extrémité circonférentielle des pattes d'accrochage 55a, 55b.

Dans l'exemple illustré, les secteurs d'anneau 52 et les secteurs de distributeur 12 ont même dimension angulaire. En variante, la dimension angulaire des secteurs d'anneau pourra être un multiple ou une fraction de celle des secteurs de distributeur.

### Premier mode de réalisation : aubes monopales à plates-formes bifonctionnelles « symétriques » et premier mode de tissage

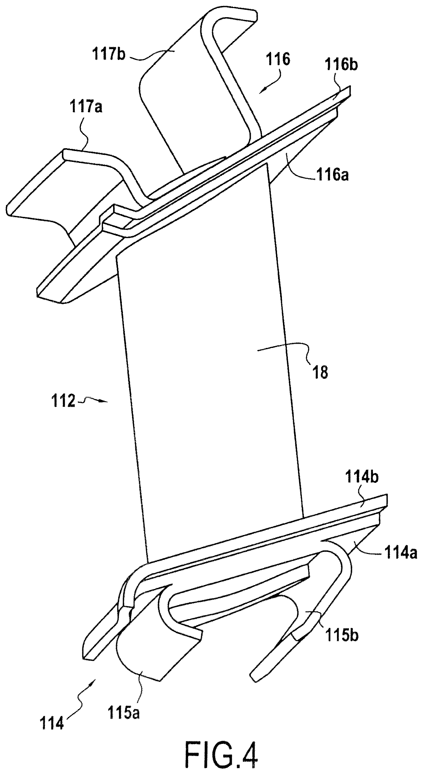

Selon un premier mode de réalisation, les secteurs de distributeur 12 sont formés par l'assemblage d'aubes unitaires mono-pales 112 en matériau CMC telle que celle de la figure 4 comprenant une plate-forme intérieure 114, une plate-forme extérieure 116 et une pale unique 18 s'étendant entre les plates-formes 114 et 116 et solidaire de celles-ci. La plate-forme 114 comprend une partie 114a formant plate-forme de constitution de la veine 45 et une partie formant des crochets 115a, 115b ayant mêmes profils que les crochets 15a, 15b, respectivement, et situés du côté intérieur de la partie 114a. Du côté extérieur, la plate-forme 116 comprend une partie 116a formant plate-forme de constitution de la veine 45 et une partie formant des pattes d'accrochage 117a, 117b ayant mêmes profils que les pattes 17a, 17b, respectivement et situées du côté extérieur de la partie 116a.

Sur un de leurs bords longitudinaux situés dans un plan axial après montage de la turbine, les plates-formes 114a, 116a de constitution de veine forment, dans l'exemple illustré, des décrochements 114b, 116b destinés à permettre des recouvrements mutuels entre bords adjacents de plates-formes de constitution de veine lors de l'assemblage des aubes 112 pour former un secteur de distributeur. Les décrochements 114b, 116b sont réalisés de façon similaire à un soyage, c'est à dire avec un décalage équivalent à l'épaisseur des plates-formes 114a, 116a pour permettre un assemblage par chevauchement afin de ne pas affecter la continuité de surface de la veine 45. Sur les bords opposés à ceux présentant les décrochements 114b, 116b, les plates-formes 114a, 116a de constitution de veine font saillie au-delà des crochets 115a, 115b et pattes d'accrochage 117a, 117b sur une largeur correspond à celle de décrochements 114b, 116b.

Un mode de réalisation d'une aube 112 telle que celle de la figure 4 sera maintenant décrit. Ce mode de réalisation est similaire à celui décrit dans le document WO 2011/080443 pour une aube de roue mobile de turbomachine, le contenu du document WO 2011/080443 étant incorporé ici par voie de référence.

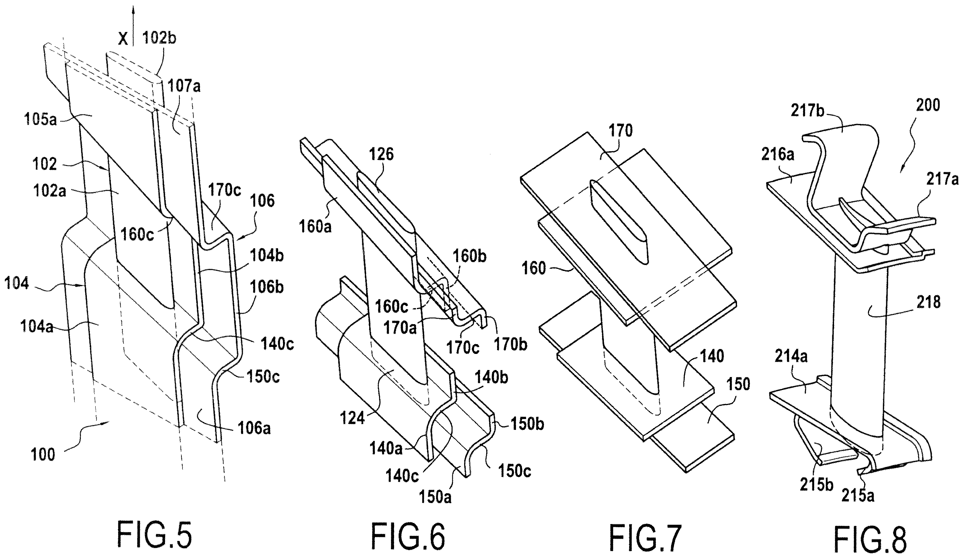

La figure 5 montre très schématiquement une ébauche fibreuse 100 à partir de laquelle une préforme fibreuse d'aube peut être mise en forme afin, après densification par une matrice et usinage éventuel, d'obtenir une aube en matériau CMC telle que l'aube 112.

L'ébauche 100 comprend trois parties 102, 104, 106 obtenues par tissage tridimensionnel ou tissage multi-couches, seules les enveloppes de ces trois parties étant représentées sur la figure 5. La partie 102 est destinée, après mise en forme, à constituer une partie de préforme de pale 18. La partie 104 est destinée, après mise en forme, à constituer les parties de préformes de plate-forme intérieure 114a et extérieure 116a de constitution de veine. La partie 106 est destinée, après mise en forme, à constituer les parties de préformes de crochets 115a, 115b et de pattes 117a, 117b.

Les trois parties 102, 104, 106 sont sous forme de bandes tissées s'étendant de façon générale dans une direction X correspondant à la direction générale de l'aube à réaliser. Le tissage est réalisé par exemple avec des fils de chaîne s'étendant dans la direction X, étant noté qu'un tissage avec des fils de trame s'étendant dans cette direction est également possible. Dans chaque partie 102, 104, 106 les fils de chaîne sont disposés sur plusieurs couches liées entre elles au moins partiellement par des fils de trame de plusieurs couches de fils de trame. Différentes armures de tissage peuvent être utilisées, par exemple des armures de type interlock, de type multi-satin ou de type multi-toile. On pourra se référer par exemple au document WO 2006/136755.

La bande fibreuse 102 peut présenter une épaisseur variable déterminée en fonction du profil de la pale de l'aube à réaliser et a une largeur choisie en fonction de la longueur de profil développé (à plat) de la pale. La variation d'épaisseur de la bande fibreuse 102 sur sa longueur est obtenue par exemple en utilisant des fils de chaîne ayant des titres variables. On peut, en variante ou en complément, faire varier la contexture des fils de chaîne (nombre de fils par unité de longueur en sens trame), une contexture plus faible autorisant un amincissement plus prononcé lors de la mise en forme de la préforme d'aube.

Les bandes fibreuses 104 et 106 ont une épaisseur sensiblement constante déterminée en fonction des épaisseurs des plates-formes 114, 116 de l'aube à réaliser. La bande 104 a une largeur correspondant au plus long des profils développés à plat des plates-formes de constitution de veine 114a, 116a tandis que la bande 106 a une largeur correspondant au plus long des profils développés à plat de l'ensemble des crochets 115a, 115b et de l'ensemble des pattes d'accrochage 117a, 117b. Les bandes 104 et 106 comprennent chacune une première partie 104a, 106a qui s'étend le long et au voisinage d'une première face 102a de la bande 102, une deuxième partie 104b, 106b qui s'étend le long et au voisinage de la deuxième face 102b de la bande 102, et une troisième partie 105a, 107a qui s'étend le long et à proximité de la première face 102a de la bande 102. Les bandes 102 et 104 suivent des trajets parallèles sans traversée mutuelle.

Les parties 104a et 104b de la bande 104 se raccordent par une partie de raccordement 140c qui s'étend transversalement par rapport à la bande 102 en traversant celle-ci à un emplacement correspondant à celui de la plate-forme intérieure de constitution de veine de l'aube 112 à réaliser. De même, les parties 106a et 106b de la bande 106 se raccordent par une partie de raccordement 150c qui s'étend transversalement par rapport à la bande 102 en traversant celle-ci et qui est adjacente ou à proximité immédiate de la partie de raccordement 140c, du côté intérieur.

Les parties 104b et 105a de la bande 140 se raccordent par une partie de raccordement 160c qui s'étend transversalement par rapport à la bande 102 en traversant celle-ci à un emplacement correspondant à celui de la plate-forme extérieure de constitution de veine de l'aube 112 à réaliser. De même, les parties 106b et 107a de la bande 106 se raccordent par une partie de raccordement 170c qui s'étend transversalement par rapport à la bande 102 en traversant celle-ci et qui est adjacente ou à proximité immédiate de la partie de raccordement 160c, du côté extérieur.

Les parties de raccordement 140c, 150c, 160c et 170c traversent la bande 102 en faisant des angles non nuls par rapport à un plan normal à la direction X, pour, dans l'exemple considéré, respecter la géométrie de l'aube à réaliser au niveau des plates-formes intérieure et extérieure. Les bandes 102, 104, 106 sont tissées simultanément, sans liaison entre la bande 102 et les parties 104a, 104b et 105a de la bande 104, sans liaison entre la bande 102 et les parties 106a, 106b et 107a de la bande 106 et sans liaison entre les bandes 104 et 106. Avantageusement, une pluralité d'ébauches successives 100 peuvent être tissées de façon continue dans la direction X. On peut également tisser simultanément plusieurs rangées parallèles d'ébauches 100.

Les figures 6 à 8 montrent très schématiquement comment une préforme fibreuse 200 ayant une forme voisine de celle de l'aube 112 à réaliser peut être obtenue à partir d'une ébauche 100.

La bande fibreuse 102 est coupée à une extrémité en amont des parties de raccordement 140c, 150c pour former une sur-longueur 124 et est coupée à une autre extrémité en arrière des parties de raccordement 160c, 170c pour former une sur-longueur 126, les sur-longueurs 124 et 126 contribuant à assurer un maintien en position des parties de raccordement 160c, 170c au niveau des traversées de la bande fibreuse 102.

Les bandes fibreuses 104 et 106 sont découpées pour laisser subsister des tronçons 140a et 140b de part et d'autre de la partie de raccordement 140c, des tronçons 150a, 150b de part et d'autre de la partie de raccordement 150c, des tronçons 160a, 160b de part et d'autre de la partie de raccordement 160c, et des tronçons 170a, 170b de part et d'autre de la partie de raccordement 170c, comme le montre la figue 6. Les longueurs des tronçons 140a, 140b, 160a, 160b sont choisies en fonction des largeurs développées à plat des plates-formes intérieure et extérieure de constitution de veine de l'aube 112 à réaliser. Les longueurs des tronçons 150a, 150b, 170a, 170b sont choisies en fonction des largeurs des crochets et pattes d'accrochage des plates-formes intérieure et extérieure de l'aube 112 à réaliser.

Du fait de l'absence de liaison avec la bande 102, les tronçons 140a, 140b et 160a, 160b de la bande 104 peuvent être dépliés pour former des plateaux 140, 160 tandis que les tronçons 150a, 150b et 170a, 170b de la bande 106 peuvent être dépliés pour former des plateaux 150, 170, comme le montre la figure 7.

La préforme fibreuse 200 de l'aube 112 à réaliser est ensuite obtenue par moulage au moyen d'un outillage de conformation avec déformation de la bande 102 pour obtenir le profil de la pale 18 de l'aube, déformation des plateaux 140, 160 pour reproduire des formes semblables à celles des plates-formes intérieure et extérieure 114a,116a de constitution de veine, et déformation des plateaux 150, 170 pour reproduire des formes semblables à celles des crochets 115a, 115b et des pattes 117a, 117b. On obtient ainsi (figure 8) une préforme d'aube 200 avec des parties 214a, 216a de préformes de plates-formes intérieure et extérieure de constitution de veine, des parties 215a, 215b de préformes de crochets, des parties 217a, 217b de préformes de pattes d'accrochage et, une partie 218 de préforme de pale.

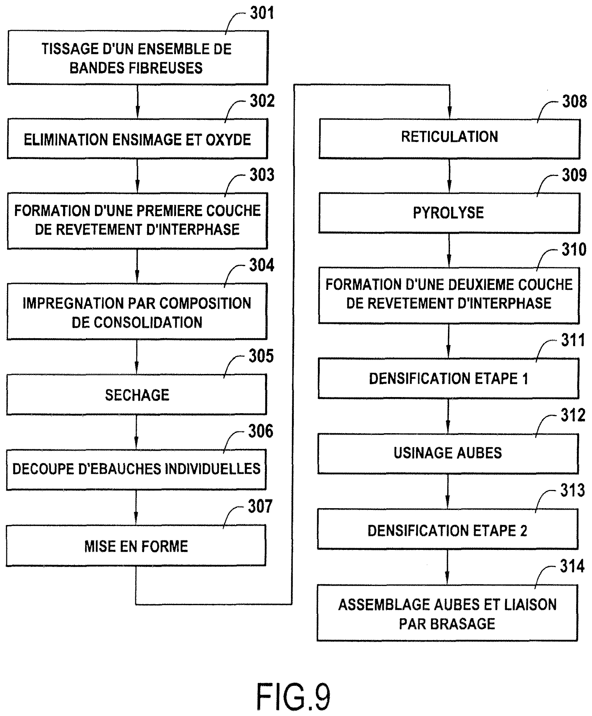

On notera que les étapes de réalisation de la préforme d'aube 200 à partir de l'ébauche 100 peuvent être effectuées avantageusement après traitement des fibres de l'ébauche 100 et imprégnation de celle-ci par une composition de consolidation comme décrit maintenant en référence à la figure 9 qui montre des étapes successives d'un mode de réalisation d'un procédé permettant de fabriquer un secteur de distributeur multi-pales en matériau CMC.

A l'étape 301, un ensemble de bandes fibreuses est tissé par tissage tridimensionnel, comprenant une pluralité d'ébauches fibreuses 100 orientées par exemple en sens chaîne, comme montré sur la figure 5. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'oxyde d'aluminium ou alumine Al₂O₃, en particulier pour des matériaux CMC de type oxyde/oxyde (fibre du renfort fibreux et matrice en oxyde réfractaire). On pourrait aussi utiliser des fils de carbone pour un matériau CMC à renfort en carbone.

A l'étape 302, l'ensemble de bandes fibreuses est traité pour éliminer l'ensimage présent sur les fibres et la présence d'oxyde à la surface des fibres. L'ensimage peut être éliminé par traitement thermique et l'oxyde peut être éliminé par traitement acide.

A l'étape 303, une mince couche de revêtement d'interphase de défragilisation est formée sur les fibres de l'ensemble de bandes fibreuses par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

Des étapes d'élimination d'ensimage, de traitement acide et de formation de revêtement d'interphase sur un substrat en fibres SiC sont décrites dans le document US 5 071 679.

A l'étape 304, l'ensemble de bandes fibreuses est ensuite imprégné par une composition de consolidation, typiquement une résine précurseur de carbone ou une résine précurseur de céramique éventuellement diluée dans un solvant.

Après séchage (étape 305), les ébauches fibreuses individuelles sont découpées (étape 306) comme illustré par la figure 6.

A l'étape 307, une ébauche ainsi découpée est mise en forme (comme illustré par les figures 7 et 8) et placée dans un outillage par exemple en graphite pour conformation des parties de préforme de pale, de préformes de plates-formes de constitution de veine, et de préformes de pattes d'accrochage et crochets.

Ensuite, la résine est réticulée (étape 308) puis pyrolysée (étape 309), la réticulation et la pyrolyse pouvant être enchaînées par élévation progressive de la température dans l'outillage.

Après pyrolyse, on obtient une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation est formée par CVI, par exemple en PyC, BN ou BC avec une épaisseur de préférence au moins égale à 100 nanomètres (étape 310). La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice auto-cicatrisante comprenant des phases de matrice en carbone pyrolytique PyC, en carbure de bore B₄C ou en système ternaire Si-B-C comme décrit notamment dans les documents US 5 246 756 et US 5 965 266. Comme indiqué plus haut, d'autres types de matrice céramique peuvent être envisagés, notamment des matrices en oxyde réfractaire, par exemple en alumine, en particulier pour des matériaux CMC de type oxyde/oxyde. La densification peut alors être réalisée par voie liquide, c'est-à-dire par imprégnation par un précurseur liquide de la matrice céramique avec transformation du précurseur par traitement thermique, ou imprégnation par composition contenant de la poudre céramique, la matrice étant alors obtenue par frittage.

La densification est de préférence réalisée en deux étapes 311, 313 séparées par une étape 312 d'usinage de l'aube à ses dimensions désirées. On obtient alors une aube telle que celle 112 de la figure 4.

L'étape suivante 314, qui ne fait pas partie de l'invention mais qui est utile à sa compréhension, consiste à réunir et lier entre elles plusieurs aubes pour former un secteur de distributeur multi-pales en matériau CMC tel que le secteur 12 de la figure 2. Les aubes sont liées en elles par brasage au niveau des recouvrements entre bords adjacents des plates-formes intérieures 114a et extérieures 116a de constitution de veine. On obtient alors des liaisons entre aubes dans des zones de liaison qui s'étendent sur une partie de la surface intérieure des plates-formes intérieures de constitution de veine et sur une partie de la surface extérieure des plates-formes extérieures de constitution de veine. Le brasage de pièces en matériau CMC, notamment à matrice SiC, est connu. On pourra se référer par exemple aux documents FR 2 664 518 et FR 2 745 808 dont le contenu est incorporé ici par voie de référence et qui décrivent différentes compositions de brasage à base de nickel et contenant également du titane, du silicium et d'autres métaux éventuels tels que du cuivre ou du chrome.

Les encoches 152a, 152b (figure 2) peuvent être réalisées lors de l'étape d'usinage 312 sur l'une des aubes constitutives d'un secteur de distributeur. Elles peuvent en variante être réalisées après assemblage du secteur. Le nombre de pales du distributeur est de 6 dans l'exemple de la figure 2. Il pourrait bien entendu être plus élevé ou moins élevé.

Après obtention de secteurs de distributeur de turbine en matériau CMC, ceux-ci sont munis de secteurs de l'anneau 50 support d'abradable, comme décrit plus haut.
Un distributeur de turbine complet en matériau CMC portant un anneau support d'abradable est ensuite constitué par le montage des secteurs 12 de distributeur dans le carter de turbine au moyen des pattes d'accrochage 17a, 17b. Le nombre de secteurs formant un distributeur complet est par exemple compris entre 16 et 40.

L'étanchéité inter-secteurs est favorisée par le recouvrement entre bords adjacents de plates-formes de constitution de veine aux extrémités des secteurs et peut éventuellement être améliorée au moyen de languettes disposées à l'interface entre secteurs de distributeur adjacents, comme cela est bien connu dans le cas de secteurs de distributeur métalliques.

On notera que l'assemblage des aubes monopales pourra être réalisé avec les plates-formes de constitution de veine jointives sans recouvrement, les plates-formes de constitution de veine extérieure et intérieure ayant alors même largeur que l'ensemble des pattes d'accrochage 117a, 117b et des crochets 115a, 115b, respectivement.

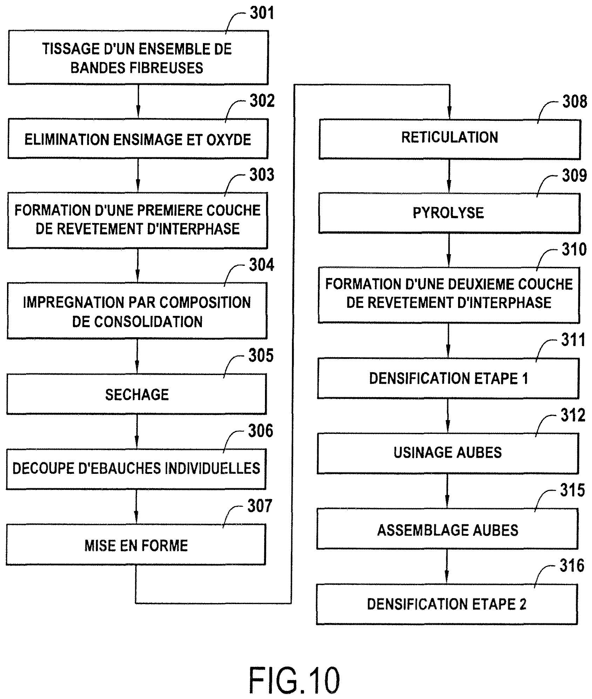

La figure 10 indique des étapes successives d'un autre procédé de fabrication d'un secteur de distributeur de turbine en CMC. Les étapes 301 à 312 sont identiques à celles du procédé de la figure 9.

Après l'étape d'usinage 312, plusieurs aubes sont maintenues ensemble pour former un secteur de distributeur (étape 315). L'assemblage des aubes peut être réalisé au moyen d'un outillage maintenant les aubes côte-à-côte, et/ou par collage pré-céramique, c'est-à-dire par collage par une résine précurseur de céramique, par exemple une résine polysilane, polysiloxane, polysilazane, polycarbosilane ou silicone, comme connu en soi. Une deuxième étape de densification ou co-densification des aubes assemblées est effectuée (étape 316), similaire à l'étape 313 du procédé de la figure 9 mais réalisée sur un secteur de distributeur complet. Lorsqu'un assemblage par collage pré-céramique a été réalisé, la réticulation et la pyrolyse de la résine pour transformation en céramique peuvent être réalisées lors de la montée en température pour la deuxième étape de densification.

### Deuxième mode de réalisation : aubes monopales à plates-formes bi-fonctionnelles « symétriques » et deuxième mode de tissage

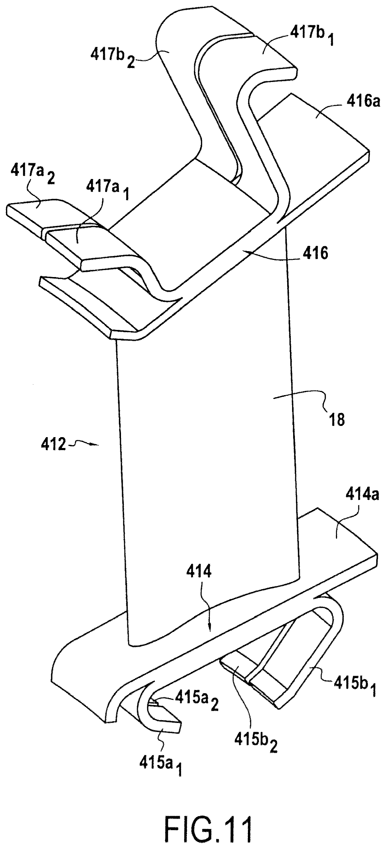

Selon un deuxième mode de réalisation (figure 11), les secteurs 12 de distributeur sont formés par l'assemblage d'aubes unitaires mono-pales 412 en matériau CMC telle que celle de la figure 11 présentant une plate-forme intérieure 414, une plate-forme extérieure 416 et une pale 18 s'étendant entre les plates-formes 414 et 416 et solidaire de celles-ci. La plate-forme 414 comprend une partie 414a formant plate-forme intérieure de constitution de veine et une partie formant, du côté intérieur, une paire de crochets amont 415a₁, 415a₂ ayant même profil et une paire de crochets aval 415b₁, 415b₂ ayant même profil. La plate-forme 416 comprend une partie 416a formant plate-forme extérieure de constitution de veine et une partie formant, du côté extérieur, une paire de pattes d'accrochage amont 417a₁, 417a₂ ayant même profil et une paire de pattes d'accrochage aval 417b₁, 417b₂ ayant même profil. Dans l'exemple illustré, les plates-formes de constitution de veine 414a et 416a ont même largeur que l'ensemble des crochets 415a₁, 415a₂, 415b₁, 415b₂ et l'ensemble des pattes d'accrochage 417a₁, 417a₂, 417b₁, 417b₂, respectivement. En variante, comme dans le mode de réalisation de la figure 4, les plates-formes de constitution de veine pourraient présenter, le long d'un bord longitudinal, des décrochements respectifs permettant un recouvrement de bords adjacents lors de l'assemblage des aubes pour former un secteur de distributeur.

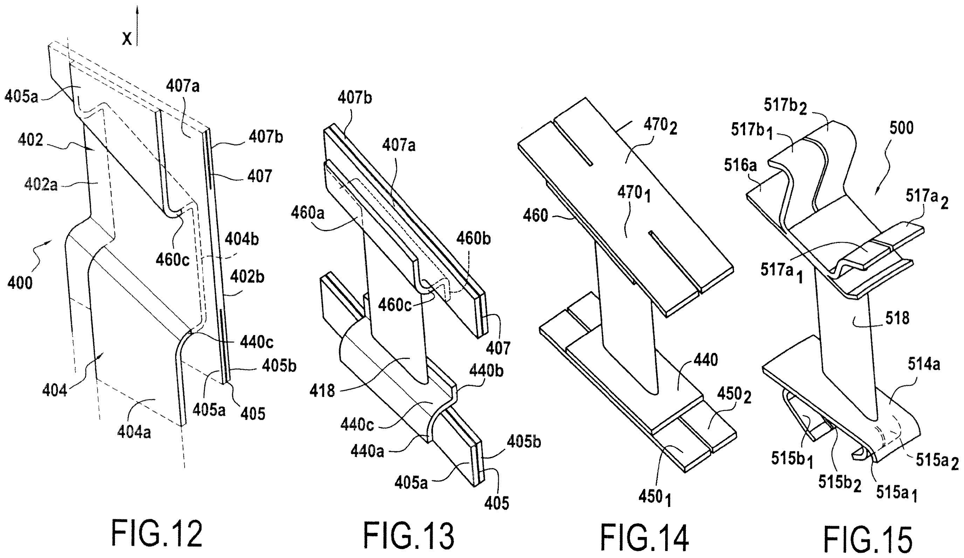

Un mode de réalisation d'une aube 412 telle que celle de la figure 11 sera maintenant décrit en référence aux figures 12 à 15.

La figure 12 montre très schématiquement une ébauche fibreuse 400 comprenant deux parties 402, 404 obtenues par tissage tridimensionnel ou tissage multi-couches, seules les enveloppes des parties 402, 404 étant représentées. La partie 402 est destinée, après mise en forme, à constituer une partie de préforme de pale 18 ainsi que des parties de préformes pour les crochets 415a₁, 415a₂, 415b₁, 415b₂ et pour les parties d'accrochage 417a₁, 417a₂, 417b₁, 417b₂. La partie 404 est destinée, après mise en forme, à constituer les parties de préformes de plates-formes intérieure et extérieure de constitution de veine 414a, 416a.

Les deux parties 402, 404 sont sous forme de bandes tissées s'étendant de façon générale dans la direction X correspondant à la direction générale de l'aube à réaliser. Le tissage des bandes 402, 404 est réalisé comme décrit plus haut pour les bandes 102, 104, 106 du mode de réalisation de la figure 5.

La bande 402 a une largeur choisie en fonction de la longueur du plus long des profils développés à plat de l'ensemble des crochets 415a₁, 415a₂, 415b₁, 415b₂ et de l'ensemble des pattes d'accrochage 417a₁, 417a₂, 417b₁, 417b₂. Dans sa partie destinée à former la préforme de pale 18, la bande 402 peut présenter une épaisseur variable en fonction du profil de la pale 18 de l'aube à réaliser comme décrit pour la bande 102 du mode de réalisation de la figure 5.

La bande 404 a une épaisseur sensiblement constante déterminée en fonction des épaisseurs des plates-formes de constitution de veine 414a, 416a de l'aube à réaliser. La bande 404 a une largeur correspondant au plus long des profils développés à plat des plates-formes de constitution de veine 414a, 416a. La bande 404 comprend une première partie 404a qui s'étend le long et au voisinage d'une première face 402a de la bande 402, une deuxième partie 404b qui s'étend le long et au voisinage de la deuxième face 402b de la bande 402 et une troisième partie 405a qui s'étend le long et à proximité de la première face 402a de la bande 402.

Les parties 404a, 404b de la bande 404 se raccordent par une partie de raccordement 440c qui s'étend transversalement par rapport à la bande 402 en traversant celle-ci à un premier emplacement correspondant à celui de la plate-forme intérieure de constitution de veine 414a de l'aube à réaliser. Les parties 404b, 405a de la bande 404 se raccordent par une partie de raccordement 460c qui s'étend transversalement par rapport à la bande 402 en traversant celle-ci à un deuxième emplacement correspondant à celui de la plate-forme extérieure de constitution de veine 416a de l'aube à réaliser. Les parties de raccordement 440c, 460c traversent la bande 402 en faisant des angles non nuls par rapport à un plan normal à la direction X pour, dans l'exemple considéré, respecter la géométrie de l'aube à réaliser au niveau des plates-formes intérieure et extérieure.

Les bandes 402, 404 sont tissées simultanément sans liaison entre la bande 402 et les parties 404a, 404b et 405a de la bande 404. Une pluralité d'ébauches successives 400 peuvent être tissées de façon continue dans la direction X. On peut également tisser simultanément plusieurs rangées parallèles d'ébauches 400.

Lors du tissage de la bande 402, des déliaisons 405, 407 sont ménagées sensiblement à mi-épaisseur et sur toute la largeur de la bande 402 dans les prolongements de la partie de la bande 402 située entre les premier et deuxième emplacements de traversée.

Ainsi, au niveau de la déliaison 405, la bande 402 est partagée en deux parties 405a, 405b dans lesquelles les couches de fils de chaîne sont liées entre elles par des fils de trame, mais sans liaison par fils de trame entre les deux parties 405a, 405b. De façon similaire, au niveau de la déliaison 407, la bande 402 est partagée en deux parties 407a, 407b.

Les figures 13 à 15 montrent très schématiquement comment une préforme fibreuse 500 ayant une forme voisine de celle de l'aube 412 à réaliser peut être obtenue à partir d'une ébauche 400.

Dans la partie s'étendant entre les premier et deuxième emplacements de traversée, la largeur de la bande 402 est réduite par élimination de parties adjacentes à ses bords longitudinaux pour laisser subsister une partie centrale 418 de largeur correspondant à la longueur du profil développé à plat de la pale 18 de l'aube à réaliser (figure 13). On notera que, dans cette partie de la bande 402 s'étendant entre le premier et le deuxième emplacements de traversée, le tissage avec les fils de trame pourra être limité à la partie centrale 418 qui subsiste.

Dans la direction longitudinale, la bande 402 est coupée à deux extrémités (figure 13) pour laisser subsister des parties déliées 405a, 405b dans le prolongement de la partie centrale 418 du côté du premier emplacement de traversée et pour laisser subsister des parties déliées 407a, 407b dans le prolongement de la partie centrale 418 du côté du deuxième emplacement de traversée.

La bande 404 est découpée pour laisser subsister des tronçons 440a, 440b de part et d'autre de la partie de raccordement 440c et des tronçons 460a, 460b de part et d'autre de la partie de raccordement 460c (figure 13). Les longueurs des tronçons 440a, 440b et 460a, 460b sont choisies en fonction des longueurs développées à plat des plates-formes intérieure et extérieure de l'aube à réaliser délimitant la veine d'écoulement de gaz.

Du fait de l'absence de liaison avec la bande 402, les tronçons 440a, 440b, 460a, 460b de la bande 404 peuvent être dépliés pour former des plateaux 440, 460 et, du fait des déliaisons 405, 407, les parties 405a, 405b et 407a, 407b peuvent également être dépliées pour former des demi-plateaux 450₁, 450₂ et 470₁, 470₂, comme le montre la figure 14.

La préforme fibreuse 500 de l'aube à réaliser est ensuite obtenue par moulage dans un outillage de conformation avec déformation de la partie 418 pour obtenir le profil de la pale 18 de l'aube, déformation des panneaux 440, 460 pour obtenir les profils des plates-formes intérieure 414a et extérieure 416a de constitution de veine, déformation du demi-plateau 450₁ pour obtenir les profils des crochets 415a₁, 415b₁, déformation du demi-plateau 450 pour obtenir les profils des crochets 415a₂, 415b₂, déformation du demi-plateau 470₁ pour obtenir les profils des pattes d'accrochage 417a₁, 417b₁ et déformation du demi-plateau 470₂ pour obtenir les profils des pattes d'accrochage 417b₁, 417b₂. On obtient ainsi (figure 15) une préforme d'aube 500 avec des parties 514a, 516a de préformes de plates-formes intérieure et extérieure de constitution de veine, des parties 515a₁, 515b₁, 515a₂, 515b₂ de préformes de crochets, des parties 517a₁, 517b₁, 517a₂, 517b₂ de préformes de pattes d'accrochage et une partie 518 de préforme de pale.

On note que les dimensions des parties déliées 405a, 405b, 407a, 407b subsistant après découpe de l'ébauche (figure 13) sont choisies en fonction des dimensions des profils développés à plat des préformes de crochets 515a₁, 515b₁, 515a₂, 515b₂ et des préformes de pattes d'accrochage 517a₁, 517b₁, 517a₂, 517b₂.

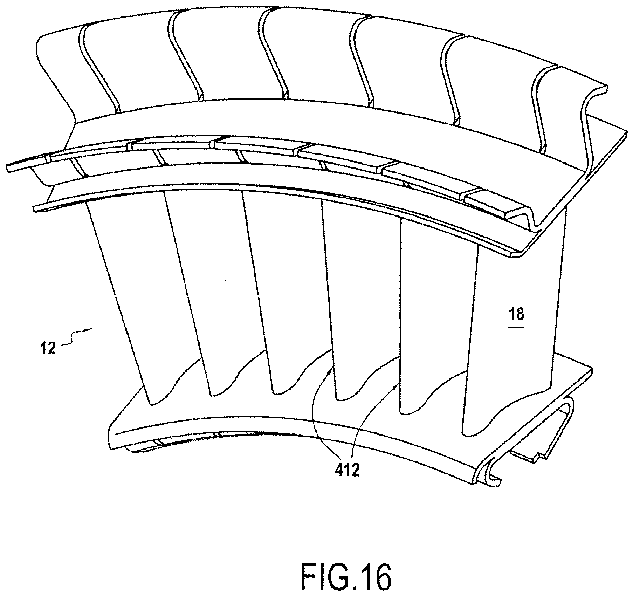

Un secteur de distributeur 12 en matériau CMC tel que montré par la figure 16 est obtenu à partir d'aubes unitaires similaires à celle de la figure 12 par un procédé semblable à celui décrit en référence à la figure 9 ou semblable à celui décrit en référence à la figure 10, les étapes de réalisation d'une préforme d'aube 500 à partir d'une ébauche 400 étant effectuées après traitement des fibres de l'ébauche et imprégnation par une résine de consolidation.

Après fabrication des secteurs de distributeurs en matériau CMC, ceux-ci sont munis de secteurs de l'anneau 50 support de matériau abradable par engagement de ces derniers sur les crochets des secteurs, et sont montés dans le carter de turbine au moyen des pattes d'accrochage, comme décrit plus haut.

### Troisième mode de réalisation : aubes monopales à plates-formes bifonctionnelles « asymétriques »

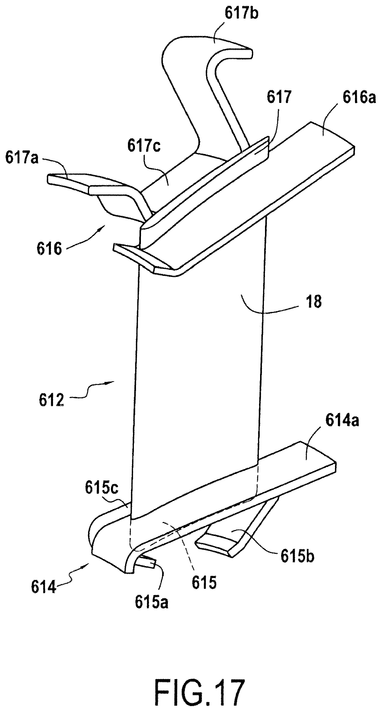

Selon un troisième mode de réalisation (figure 17), les secteurs 12 de distributeur sont formés par l'assemblage d'aubes unitaires mono-pales 612 telle que celle de la figure 17 présentant une plate-forme intérieure 614, une plate-forme extérieure 616 et une pale 18 s'étendant entre les plates-formes intérieure et extérieure et solidaire de celles-ci. La plate-forme intérieure 614 et la plate-forme extérieure 616 comprennent des parties formant respectivement plate-forme intérieure de constitution de veine 614a et plate-forme extérieure de constitution de veine 616a qui s'étendent aux extrémités de la pale 18 sur un seul et même côté de la pale 18, du côté de la face intrados ou extrados (dans l'exemple illustré, du côté de la face extrados).

Du côté intérieur de la plate-forme intérieure de constitution de veine 614a, la pale se prolonge par un prolongement 615 auquel est raccordée la partie de base 615c d'un crochet amont 615a et d'un crochet aval 615b situés sur le côté de la pale 18 opposé à celui où se situe la plate-forme intérieure de constitution de veine 614a. Les crochets 615a, 615b se raccordent au prolongement 615 en un emplacement décalé en direction longitudinale vers l'intérieur par rapport à l'emplacement où la plate-forme intérieure de constitution de veine 614a se raccorde à la pale 18. Du côté extérieur de la plate-forme extérieure de constitution de veine 616a, la pale se prolonge par un prolongement 617 auquel est raccordée la partie de base 617c d'une patte d'accrochage amont 617a et d'une patte d'accrochage aval 617b situées sur le côté de la pale 18 opposé à celui où se situe la plate-forme extérieure de constitution de veine 616a. Les pattes d'accrochage 617a, 617b se raccordent au prolongement 617 en un emplacement décalé en direction longitudinale vers l'extérieur par rapport à l'emplacement où la plate-forme extérieure de constitution de veine 616a se raccorde à la pale 18.

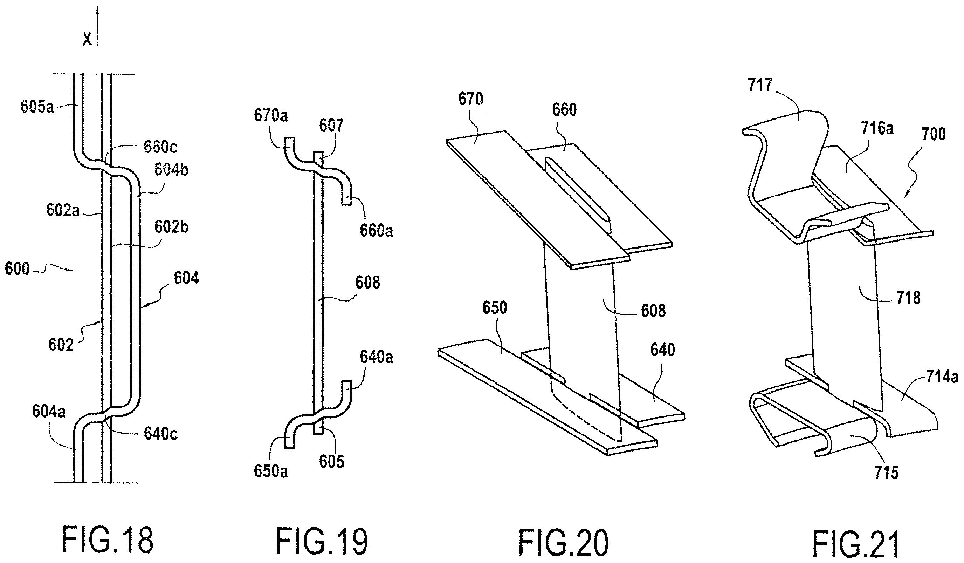

Un mode de réalisation d'une aube telle que celle 612 de la figure 17 sera maintenant décrit en référence aux figures 18 à 21.

La figure 18 montre très schématiquement une ébauche fibreuse 600 comprenant deux parties 602, 604 obtenues par tissage tridimensionnel ou tissage multi-couches, seuls les profils des parties 602, 604 étant représentés. La partie 602 est destinée, après mise en forme, à constituer une partie de préforme de pale 18 de l'aube à réaliser. La partie 604 est destinée, après mise en forme, à constituer des parties de préformes de plate-forme intérieure de constitution de veine 614a, des crochets 615a, 615b, de plate-forme extérieure de constitution de veine 616a et de pattes d'accrochage 617a, 617b.

Les deux parties 602, 604 sont sous forme de bandes tissées s'étendant de façon générale dans la direction X correspondant à la direction longitudinale de l'aube à réaliser. Le tissage des bandes 602, 604 est réalisé comme décrit plus haut pour les bandes 102, 104, 106 du mode de réalisation de la figure 5.

La bande 602 peut présenter une épaisseur variable déterminée en fonction du profil de la pale 18 de l'aube à réaliser et a une largeur choisie en fonction de la longueur du profil développé à plat de la pale.

La bande 604 a une épaisseur sensiblement constante déterminée en fonction des épaisseurs des plates-formes intérieure et extérieure de constitution de veine de l'aube à réaliser ainsi que des épaisseurs des crochets et pattes d'accrochage. La bande 604 a une largeur correspondant au plus long des profils développés à plat des plates-formes intérieure et extérieure de constitution de veine et des crochets et pattes d'accrochage de l'aube à réaliser. La bande 604 a une première partie 604a qui s'étend le long et au voisinage d'une première face 602a de la bande 602, une deuxième partie 604b qui s'étend le long et au voisinage de la deuxième face 602b de la bande 602 et une troisième partie 605a qui s'étend le long et à proximité de la première face 602a de la bande 602.

Les parties 604a, 604b de la bande 604 se raccordent par une partie de raccordement 640c qui traverse la bande 602 en un premier emplacement de traversée dont les sorties de traversée situées sur les faces 602a, 602b sont décalées l'une par rapport à l'autre en direction longitudinale et sont situées à des niveaux correspondant respectivement à ceux des crochets et de la plate-forme intérieure de constitution de veine de l'aube à réaliser. Les parties 604b, 605a de la bande 604 se raccordent par une partie de raccordement 660c qui traverse la bande 602 en un deuxième emplacement de traversée dont les sorties de traversée situées sur les faces 602a, 602b sont décalées l'une par rapport à l'autre en direction longitudinale et sont situées à des niveaux correspondant respectivement à ceux de la plate-forme extérieure de constitution de veine et des pattes d'accrochage de l'aube à réaliser. En outre, les parties de raccordement 640c, 660c traversent la bande 602 en faisant des angles non nuls par rapport à un plan normal à la direction X pour, dans l'exemple considéré, respecter la géométrie de l'aube à réaliser au niveau des plates-formes intérieure et extérieure.

Les bandes 602 et 604 sont tissées simultanément sans liaison entre la bande 602 et les parties 604a, 604b et 605a de la bande 604. Une pluralité d'ébauches successives 600 peuvent être tissées de façon continue dans la direction X. On peut aussi tisser simultanément plusieurs rangées parallèles d'ébauches 600.

Les figures 19 à 21 montrent très schématiquement comment une préforme fibreuse 700 ayant une forme voisine de celle de l'aube 612 à réaliser peut être obtenue à partir d'une ébauche 600.

Dans la direction longitudinale, la bande 602 est coupée à deux extrémités pour laisser subsister une partie 608 destinée à former une préforme de pale de l'aube à réaliser prolongée à ses extrémités par un prolongement intérieur 605 et un prolongement extérieur 607 (figure 19).

La bande 604 est découpée pour laisser subsister un tronçon 650a du côté de la sortie du premier emplacement de traversée située sur la face 602a de la bande 602, un tronçon 640a du côté de la sortie du premier emplacement de traversée située sur la face 602b de la bande 602, un tronçon 660a du côté de la sortie du deuxième emplacement de traversée située sur la face 602b de la bande 602 et un tronçon 670a du côté de la sortie du deuxième emplacement de traversée située sur la face 602a de la bande 602.

Les longueurs des tronçons 640a et 660a sont choisies en fonction de la largeur des plates-formes intérieure et extérieure de constitution de veine de l'aube à réaliser. Les longueurs des tronçons 650a et 670a sont choisies en fonction des largeurs des crochets et pattes d'accrochage de l'aube à réaliser. Les longueurs des tronçons 640a et 650a sont sensiblement égales entre elles de même que les longueurs des tronçons 660a et 670a.

Du fait de l'absence de liaison avec la bande 602, les tronçons 640a et 650a peuvent être dépliés de part et d'autre de la partie 608, de même que les tronçons 660a et 670a, formant des plateaux 640, 650, 660 et 670 (figure 20). Après découpes éventuelles de parties d'extrémité, les longueurs des plateaux 640, 660 correspondent respectivement aux longueurs des profils développés à plat des plates-formes intérieure et extérieure de constitution de veine de l'aube à réaliser, tandis que les longueurs des plateaux 650, 670 correspondent respectivement aux longueurs des profils développés à plat des crochets et pattes d'accrochage de l'aube à réaliser. La largeur de la bande 104 est donc choisie en fonction de la plus grande des longueurs à conférer aux plateaux 640, 650, 660 et 670, les plateaux ayant une longueur plus faible étant obtenus après découpe des parties excédentaires comme indiqué plus haut.

La préforme fibreuse 700 de l'aube à réaliser est ensuite obtenue par moulage au moyen d'un outillage de conformation avec déformation de la partie 608 pour obtenir le profil de la pale 18 de l'aube, déformation des plateaux 640, 660 pour reproduire des formes semblables respectivement à celles des plates-formes intérieure 614a et extérieure 616a de constitution de veine de l'aube à réaliser, déformation du plateau 650 pour reproduire une forme semblable à celle des crochets 615a, 615b et déformation du plateau 670 pour reproduire une forme semblable à celle des pattes d'accrochage 617a, 617b. On obtient ainsi (figure 21) une préforme d'aube 700 avec des parties 714a, 716a de préformes de plates-formes intérieure et extérieure de constitution de veine, des parties 715, 717 de préformes de crochets et pattes d'accrochage, et une partie 718 de préforme de pale.

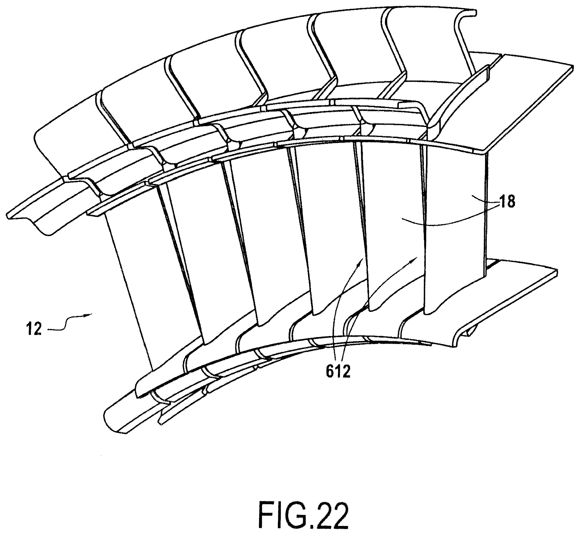

Un secteur de distributeur 12 en matériau CMC tel que montré par la figure 22 est obtenu à partir d'aubes unitaires similaires à celle de la figure 17 par un procédé semblable à celui décrit en référence à la figure 9 ou semblable à celui décrit en référence à la figure 10, les étapes de réalisation d'une préforme d'aube 700 à partir d'une ébauche 600 étant effectuées après traitement des fibres de l'ébauche et imprégnation par une résine de consolidation.

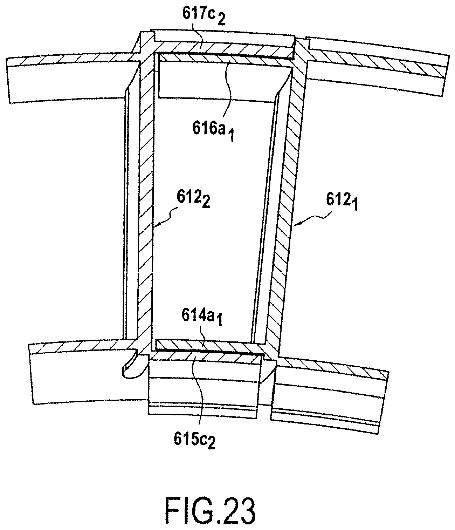

On notera que les aubes unitaires sont assemblées en engageant la plate-forme intérieure de constitution de veine 614a₁ d'une première aube 612₁ du côté extérieur de la partie de base 615c₂ des crochets d'une deuxième aube voisine 612₂, et en engageant la plate-forme extérieure de constitution de veine 616a₁ de la première aube 612₁ du côté intérieur de la partie de base 617c₂ des pattes d'accrochage de la deuxième aube 612₂ (figure 23). Le décalage en direction longitudinale entre les zones de raccordement à la pale d'une aube de la plate-forme intérieure de constitution de veine et des crochets est choisi sensiblement égal ou légèrement supérieure à l'épaisseur de la plate-forme intérieure de constitution de veine. De même, le décalage en direction longitudinale entre les zones de raccordement à la pale d'une aube de la plate-forme extérieure de constitution de veine et des pattes d'accrochage est choisi sensiblement égal ou légèrement supérieur à l'épaisseur de la plate-forme extérieure de constitution de veine. Lors de la liaison entre aubes unitaires, une liaison par co-densification peut ainsi être réalisée entre la surface intérieure de la plate-forme intérieure de constitution de veine 614a₁ d'une première aube et la partie de base 615c₂ des crochets d'une deuxième aube voisine, ainsi qu'entre la surface extérieure de la plate-forme extérieure de constitution de veine 616a₁ de la première aube 612₁ et la partie de base 617c₂ des pattes d'accrochage de la deuxième aube 612₂, comme le montre très schématiquement la figure 23. En outre, lors de l'usinage des aubes unitaires, les bords d'extrémité des plates-formes intérieure et extérieure de constitution de veine d'une aube pourront être usinés pour s'ajuster sensiblement au profil de la pale de l'aube voisine à laquelle ils sont adjacents.

Après fabrication des secteurs de distributeur en matériau CMC, ceux-ci sont munis de secteurs de l'anneau 50 support de matériau abradable par engagement de ces derniers sur les crochets des secteurs, et sont montés dans le carter de turbine 40 au moyen des pattes d'accrochage, comme décrit plus haut.

### Quatrième mode de réalisation : aubes monopales à plates-formes monofonctionnelles alternées

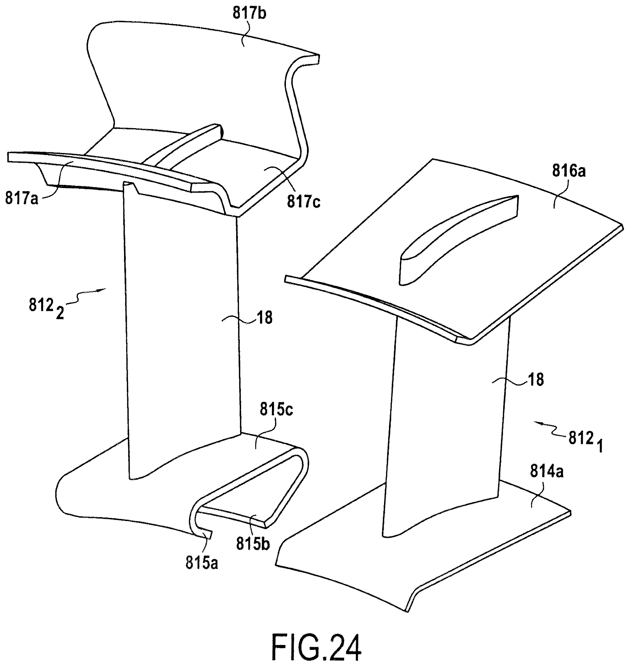

Selon un quatrième mode de réalisation (figure 24), les secteurs de distributeur sont formés par l'assemblage de premières aubes monopales 812₁ alternant avec des deuxièmes aubes monopales 812₂ telles que celles de la figure 24.

Les premières aubes 812₁ présentent une plate-forme intérieure 814a limitée à une plate-forme intérieure de constitution de veine, une plate-forme extérieure 816a limitée à une plate-forme extérieure de constitution de veine et une pale 18 s'étendant entre les plates-formes 814a, 816a et solidaire de celles-ci.

Les deuxièmes aubes 812₂ présentent une plate-forme intérieure limitée à un ensemble de deux crochets 815a, 815b, reliés par une partie de base 815c, une plate-forme extérieure limitée à un ensemble de deux pattes d'accrochage 817a, 817b reliées par une partie de base 817c et une pale 18 s'étendant entre les plates-formes et solidaire de celles-ci.

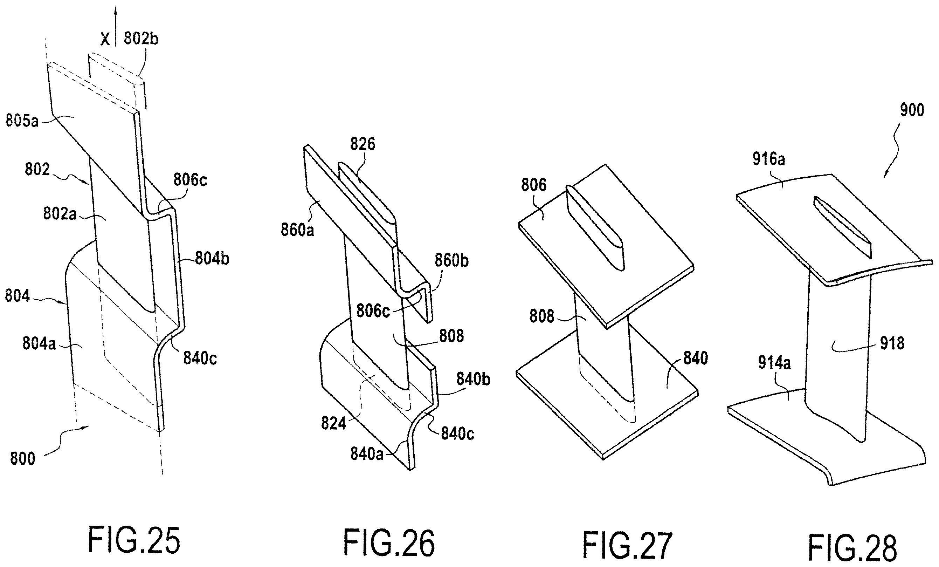

Un mode de réalisation d'une aube telle que celle 812₁ de la figure 24 sera maintenant décrit en référence aux figures 25 à 28.

La figure 25 montre très schématiquement une ébauche fibreuse 800 comprenant deux parties 802 et 804 obtenues par tissage tridimensionnel ou tissage multi-couches, seuls les profils des parties 802, 804 étant représentés. La partie 802 est destinée, après mise en forme, à constituer une partie de préforme de pale 18 de l'aube à réaliser. La partie 804 est destinée, après mise en forme, à constituer des parties de préformes des plates-formes intérieure et extérieure de constitution de veine 814a et 816a.

Les deux parties 802, 804 sont sous forme de bande tissées s'étendant de façon générale dans la direction X correspondant à la direction longitudinale de l'aube à réaliser. Le tissage des bandes 802, 804 est réalisé comme décrit plus haut pour les bandes 102, 104, 106 du mode de réalisation de la figure 5.

La bande 802 peut présenter une épaisseur variable déterminée en fonction du profil de la pale 18 de l'aube à réaliser et a une largeur choisie en fonction de la longueur du profil développé à plat de la pale.

La bande 804 a une épaisseur sensiblement constante déterminée en fonction des épaisseurs des plates-formes intérieure et extérieure de constitution de veine de l'aube à réaliser. La bande 804 a une largeur correspondant au plus long des profils développés à plat des plates-formes intérieure et extérieure de constitution de veine. La bande 804 a une première partie 804a qui s'étend le long et au voisinage d'une première face 802a de la bande 802, une deuxième partie 804b qui s'étend le long et au voisinage de la deuxième face 802b de la bande 802 et une troisième partie 805a qui s'étend le long et à proximité de la première face 802a de la bande 802.

Les parties 804a, 804b de la bande 804 se raccordent par une partie de raccordement 840c qui traverse la bande 802 en un premier emplacement de traversée situé à un niveau correspondant à celui de la plate-forme intérieure de constitution de veine de l'aube à réaliser. Les parties 804b, 805a de la bande 804 se raccordent par une partie de raccordement 860c qui traverse la bande 802 en une deuxième emplacement de traversée situé à un niveau correspondant à celui de la plate-forme extérieure de constitution de veine de l'aube à réaliser. En outre, les parties de raccordement 840c, 860c traversent la bande 802 en faisant des angles non nuls par rapport à un plan normal à la direction X pour, dans l'exemple considéré, respecter la géométrie de l'aube à réaliser au niveau des plates-formes intérieure et extérieure.

Les bandes 802 et 804 sont tissées simultanément sans liaison entre la bande 802 et les parties 804a, 804b et 805a de la bande 804. Une pluralité d'ébauches successives 800 peuvent être tissées de façon continue dans la direction X. On peut aussi tisser simultanément plusieurs rangées parallèles d'ébauches 800.

Les figures 26 à 28 montrent très schématiquement comment un préforme fibreuse 900 ayant une forme voisine de celle de l'aube 812₁ à réaliser peut être obtenue à partir d'une ébauche 800.

Dans la direction longitudinale, la bande 802 est coupée à deux extrémités pour laisser subsister une partie 808 destinée à former une préforme de pale de l'aube à réaliser prolongée à ses extrémités par une sur-longueur intérieure 824 et une sur-longueur extérieure 826 (figure 26).

La bande 804 est découpée pour laisser subsister des tronçons 840a et 840b de chaque côté du premier emplacement de traversée et des tronçons 860a et 860b de chaque côté du deuxième emplacement de traversée.

Les longueurs des tronçons 840a et 840b et des tronçons 860a et 860b sont choisies en fonction de la largeur des plates-formes intérieure et extérieure de constitution de veine de l'aube à réaliser.

Du fait de l'absence de liaison avec la bande 802, les tronçons 840a et 840b peuvent être dépliés de part et d'autre de la partie 808, de même que les tronçons 860a et 860b, formant des plateaux 840 et 860 (figure 27). Après découpes éventuelles de parties d'extrémité, les longueurs des plateaux 840 et 860 correspondent respectivement aux longueurs des profils développés à plat des plates-formes intérieure et extérieure de constitution de veine de l'aube à réaliser. La largeur de la bande 804 est donc choisie en fonction de la plus grande des longueurs à conférer aux plateaux 840 et 860.

La préforme fibreuse 900 de l'aube à réaliser est ensuite obtenue par moulage au moyen d'un outillage de conformation avec déformation de la partie 808 pour obtenir le profil de la pale 18 de l'aube, et déformation des plateaux 840, 860 pour reproduire des formes semblables respectivement à celles des plates-formes intérieure 814a et extérieure 816a de constitution de veine de l'aube à réaliser. On obtient ainsi (figure 28) une préforme d'aube 900 avec des parties 914a, 916a de préformes de plates-formes intérieure et extérieure de constitution de veine et une partie 918 de préforme de pale.

Une préforme de deuxième aube 812₂ est obtenue de façon similaire à une première aube 812₁.

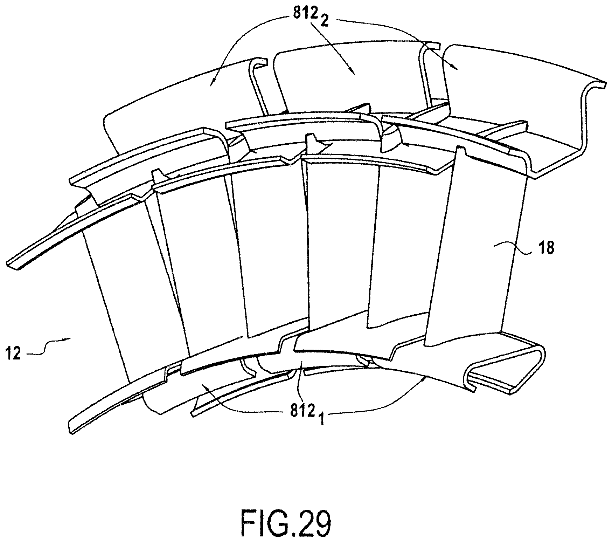

Un secteur de distributeur 12 en matériau CMC tel que montré par la figure 29 est obtenu en assemblant des premières aubes 812₁ en alternance avec des deuxièmes aubes 812₂ de la figure 24 par un procédé semblable à celui décrit en référence à la figure 9 ou semblable à celui décrit en référence à la figure 10, les étapes de réalisation d'une préforme d'aube à partir d'une ébauche étant effectuées après traitement des fibres de l'ébauche et imprégnation par une résine de consolidation.

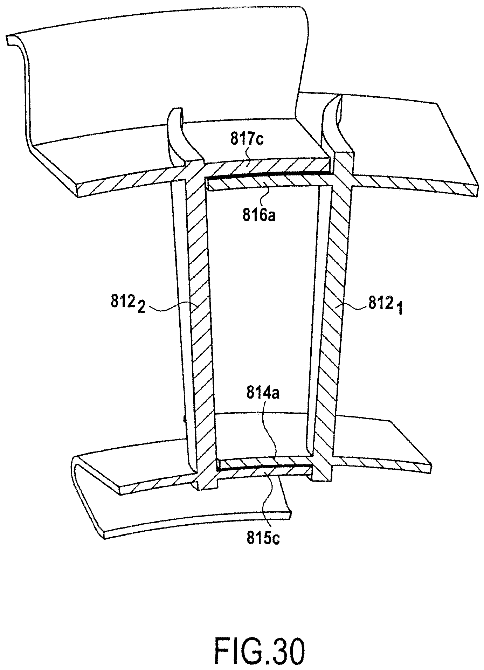

Les aubes 812₁ et 812₂ sont assemblées (figure 30) en insérant :
- la partie d'une plate-forme 814a située d'un côté (par exemple intrados) de la pale 18 d'une première aube 812₁ au-dessus de la partie de la base 815c située de l'autre côté (en l'espèce extrados) de la pale 18 d'une deuxième aube adjacente 812₂, et
- la partie d'une plate-forme 816a située d'un côté de la pale 18 d'une première aube 812₁ au-dessous de la partie de la base 817c située de l'autre côté de la pale 18 d'une deuxième aube 812₂.

Lors de la liaison entre les aubes, une liaison par co-densification peut ainsi être réalisée entre la surface intérieure de la plate-forme de constitution de veine 814a d'une première aube 812₁ et la surface extérieure de la partie de base 815c des crochets d'une deuxième aube voisine 812₂, ainsi qu'entre la surface extérieure de la plate-forme extérieure de constitution de veine 816a de la première aube 812₁ et la surface extérieure de la partie de base 817c des pattes d'accrochage de la deuxième aube 812₂, comme le montre très schématiquement la figure 30. En outre, lors de l'usinage des aubes unitaires, les bords d'extrémité des plates-formes intérieure et extérieure de constitution de veine d'une première aube 812₁ pourront être usinés pour s'ajuster sensiblement au profil de la pale de la deuxième aube voisine 812₂ à laquelle ils sont adjacents.

Après fabrication des secteurs de distributeur en matériau CMC, ceux-ci sont munis de secteurs de l'anneau 50 support de matériau abradable par engagement de ces derniers sur les crochets des secteurs, et sont montés dans le carter de turbine 40 au moyen des pattes d'accrochage, comme décrit plus haut.

### Autres modes de réalisation

Dans ce qui précède, est envisagé, du côté intérieur des plates-formes intérieure, la réalisation des crochets pour l'accrochage d'un anneau support d'abradable. A la place de crochets, on pourrait en variante former des becquets.

Par ailleurs, différents modes de réalisation pourront être combinés, en réalisant un secteur par assemblage d'aubes réalisées selon un des modes de réalisation décrits au niveau des plates-formes intérieures et réalisées selon un autre des modes de réalisation au niveau des plates-formes extérieures. Par exemple on pourra assembler des aubes à plates-formes extérieures bifonctionnelles asymétriques et à plates-formes intérieures monofonctionnelles alternées, ou inversement.

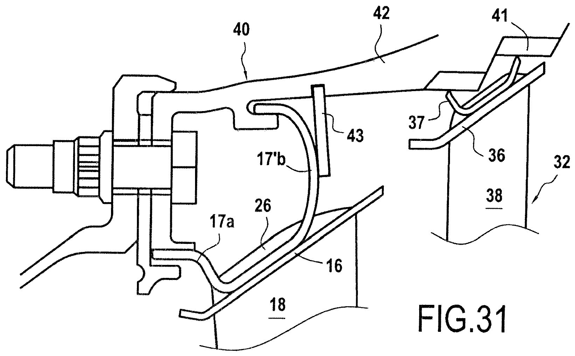

La figure 31 est une vue partielle montrant en outre une variante du montage d'un secteur de distributeur en CMC dans un carter de turbine.

Cette variante se distingue du mode de la réalisation de la figure 1 en ce que la patte d'accrochage aval 17'b a un profil en C avec son extrémité recourbée vers l'amont et engagée dans un crochet du carter 40 dans le même sens que la patte d'accrochage amont 17a. Un blocage en direction axiale est réalisé par exemple au moyen d'une bague élastiquement déformable 43 dont la partie périphérique externe est logée dans une rainure formée dans le carter et qui s'appuie sur le côté aval de la patte d'accrochage 17'b.

Un maintien axial du distributeur de turbine est ainsi assuré tout en s'accommodant de variations dimensionnelles différentielles d'origine thermique entre le distributeur en matériau CMC et le carter de turbine métallique.

### Application à un redresseur de compresseur

Dans la description détaillée qui précède, est envisagée l'application de l'invention à un distributeur de turbine basse pression. L'invention est toutefois applicable à des distributeurs de turbine en CMC pour des corps de turbine autres qu'un corps basse pression, ainsi qu'à des redresseurs de compresseur en matériau CMC, notamment dans les étages de compresseur exposés en service à des températures élevées.

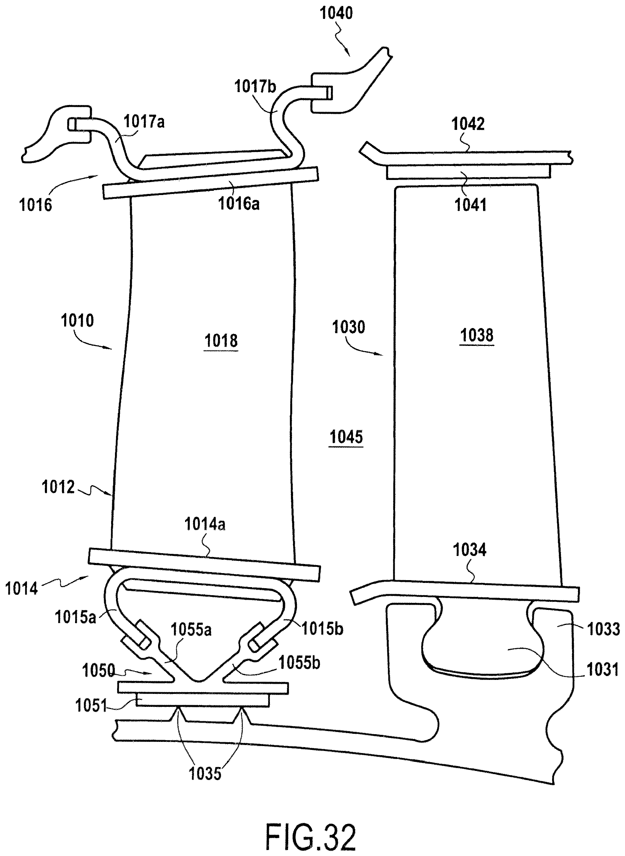

Un compresseur multi-étages de turbomachine, par exemple de turbomoteur aéronautique est montré partiellement et de façon très schématique sur la figure 32. Le compresseur, par exemple un compresseur haute pression, comprend une pluralité de redresseurs fixes 1010 qui alternent avec des roues mobiles 1030 et sont montés dans un carter de compresseur 1040.

Chaque roue mobile 1030 comprend une pluralité d'aubes 1032 ayant une plate-forme intérieure 1034 solidaire d'une pale 1038. Du côté intérieur de la plate-forme intérieure, chaque aube 1032 se prolonge par un pied 1031 engagé dans un logement d'un rotor 1033. A leur extrémité extérieure, les pales 1038 des aubes peuvent présenter des léchettes (non représentées) en regard d'un revêtement abradable 1041 porté par un anneau sectorisé 1042 supporté par le carter de compresseur.

Au moins l'un des redresseurs, par exemple le redresseur 1010 de la figure 32, est réalisé par assemblage de secteurs de redresseur 1012 en matériau CMC.

Chaque secteur de redresseur est formé par assemblage d'aubes unitaire mono-pales et comprend une plate-forme intérieure 1014, une plate-forme extérieure 1016 et des pales 1018 s'étendant entre les plates-formes 1014 et 1016 et solidaire de celles-ci. Les plates-formes 1014 et 1016 comprennent des parties 1014a, 1016a formant plates-formes intérieure et extérieure de constitution de veine.

Les faces extérieures des plates-formes intérieures de constitution de veine 1014a et les faces intérieures des plates-formes extérieures de constitution de veine 1016a délimitent la veine 1045 d'écoulement d'air dans le compresseur au niveau du redresseur 1010.

Du côté intérieur, chaque plate-forme 1014 présente des crochets 1015a, 1015b tandis que, du côté extérieur, chaque plate-forme 1016 présente des pattes d'accrochage 1017a, 1017b.

Les parties terminales des pattes d'accrochage 1017a, 1017b sont engagées dans des crochets portés par le carter 1040 afin de monter les secteurs de redresseurs de carter 1040.

Les crochets 1015a et 1015b supportent et maintiennent en position un anneau métallique sectorisé 1050 qui supporte du côté intérieur un matériau abradable 1051 en regard de léchettes 1035 portées par le disque 1033.

L'anneau métallique 1050 est formé de secteurs juxtaposés s'étendant par exemple sur un même angle que les secteurs de redresseur et constituant chacun une cartouche d'abradable. De la même manière que pour l'anneau 50 de la figure 1, l'anneau 1050 présente du côté extérieur des pattes d'accrochage 1055a, 1055b qui forment à leurs extrémités des glissières dans lesquelles sont engagées sans solidarisation les parties terminales des crochets 1015a, 1015b, des butées d'arrêt circonférentiel étant prévues pour aligner radialement chaque secteur de l'anneau 1050 avec un secteur de redresseur.

Les aubes mono-pales constituant chaque secteur de redresseur sont réalisées et assemblées entre elles comme décrit plus haut pour les aubes unitaires formant des secteurs de distributeur de turbine.

On a envisagé ci-avant la réalisation d'un redresseur de compresseur en matériau CMC. Lorsque les températures rencontrées en service sont moins élevées, notamment pour les étages amont d'un compresseur, on peut utiliser un matériau composite à matrice organique (CMO) réalisé avec des fibres par exemple de carbone ou de verre et une matrice polymère.

Un secteur de redresseur en matériau CMO est obtenu par assemblage d'aubes monopales.

Après tissage d'un ensemble de bandes fibreuses, découpe d'ébauches individuelles et mise en forme au moyen d'un outillage de conformation, comme aux étapes 301, 306 et 307 de procédé de la figure 9, chaque préforme d'aube obtenue maintenue dans son outillage est imprégnée par une résine par injection ou infusion. Un traitement thermique de réticulation de la résine est effectué pour obtenir une préforme d'aube consolidée partiellement densifiée. Après usinage, plusieurs préformes d'aubes consolidées sont assemblées en étant maintenues par un outillage. Les préformes consolidées assemblées sont co-densifiées, la co-densification étant réalisée par au moins un cycle d'imprégnation par une résine et réticulation de celle-ci. Un usinage final peut éventuellement être réalisé. La résine utilisée pour consolidation et co-densification est une résine précurseur de matrice polymère, telle qu'une résine époxyde, bismaléimide ou polyimide, par exemple.

## Revendications

1. Procédé de fabrication d'un secteur (12 ; 1012) de distributeur de turbine ou de redresseur de compresseur de turbomachine en matériau composite comprenant :
- la réalisation d'aubes de distributeur de turbine ou de redresseur de compresseur unitaires mono-pales (112 ; 412 ; 612 ; 812₁, 812₂) ayant chacune une plate-forme intérieure (114 ; 414 ; 614 ; 814a, 815a), une plate-forme extérieure (116 ; 416 ; 616 ; 816a, 817a) et une pale (18) s'étendant entre les plates-formes intérieure et extérieure et solidaire de celles-ci, la réalisation de chaque aube de distributeur comprenant :
• la réalisation par tissage tridimensionnel d'une ébauche fibreuse (100 ; 400 ; 600 ; 800) en une seule pièce,
• la mise en forme de l'ébauche fibreuse pour obtenir une préforme fibreuse (200 ; 500 ; 700 ; 900) en une seule pièce ayant une première partie formant préforme de pale, une deuxième partie formant préforme de plate-forme intérieure, et une troisième partie formant préforme de plate-forme extérieure, et
• la densification partielle de la préforme par une matrice pour obtenir une aube en matériau composite ayant un renfort fibreux formé par la préforme et densifié par la matrice, et formant une seule pièce avec plates-formes intérieure et extérieure intégrées,
- l'usinage de l'aube, et
- l'assemblage et la liaison de plusieurs aubes entre elles pour former un secteur multi-pales de distributeur de turbine ou de redresseur de compresseur en matériau composite, la liaison étant réalisée par un processus comprenant au moins une étape de liaison par co-densification par une matrice d'aubes assemblées à un stade intermédiaire de densification.

2. Procédé selon la revendication 1 pour la réalisation d'un secteur de distributeur de turbine ou de redresseur de compresseur en matériau composite à matrice céramique, **caractérisé en ce que** l'assemblage des aubes usinées comprend une étape de collage pré-céramique.

3. Procédé selon la revendication 1 ou 2, **caractérisé en ce que** la plate-forme extérieure (116a ; 416a ; 616a ; 816a) ou intérieure (114a ; 414a ; 614a ; 814a) d'une première aube comprend une plate-forme extérieure ou intérieure de constitution de veine et est reliée à une plate-forme extérieure ou intérieure d'une deuxième aube voisine au moins en partie le long d'au moins une zone de liaison s'étendant sur une partie de la surface extérieure de la plate-forme extérieure de constitution de veine de la première aube et/ou sur une partie de la surface intérieure de la plate-forme intérieure de constitution de veine de la première aube.

4. Procédé selon l'une quelconque des revendications 1 à 3, **caractérisé en ce que** chaque aube est réalisée avec une plate-forme extérieure (116 ; 416) ayant une partie formant plate-forme extérieure (116a ; 416a) de constitution de veine et une partie formant des pattes d'accrochage (117a ; 117b ; 417a ; 417b), la plate-forme extérieure de constitution de veine ainsi que les pattes d'accrochage s'étendant d'un côté et de l'autre de la pale (18) et les pattes d'accrochage étant situées à l'extérieur de la plate-forme extérieure de constitution de veine.

5. Procédé selon l'une quelconque des revendications 1 à 3, **caractérisé en ce que** chaque aube (616) est réalisée avec une plate-forme extérieure ayant une partie formant plate-forme extérieure (616a) de constitution de veine, d'un côté de la pale (18), et une partie formant des pattes d'accrochages (617a, 617b) de l'autre côté de la pale, et l'assemblage entre deux aubes voisines est réalisé en engageant les pattes d'accrochage d'une des deux aubes du côté extérieur de la plate-forme extérieure de constitution de veine de l'autre des deux aubes.

6. Procédé selon l'une quelconque des revendications 1 à 3, **caractérisé en ce que** :
- l'on réalise des premières aubes (812) ayant chacune une plate-forme intérieure, une plate-forme extérieure (816a) formant plate-forme extérieure de constitution de veine et une pale (18) s'étendant entre les plates-formes intérieure et extérieure et solidaire de celles-ci,
- l'on réalise des deuxièmes aubes ayant chacune une plate-forme intérieure, une plate-forme extérieure formant pattes d'accrochage (817a, 817b) et une pale (18) s'étendant entre les plates-formes intérieure et extérieure et solidaire de celles-ci, et
- l'on forme un secteur en assemblant des premières aubes en alternance avec des deuxièmes aubes, les pattes d'accrochage d'une deuxième aube étant engagées du côté extérieur de la plate-forme extérieure de constitution de veine d'une première aube.

7. Procédé selon l'une quelconque des revendications 1 à 6, **caractérisé en ce que** chaque aube (112 ; 412) est réalisée avec une plate-forme intérieure ayant une partie formant plate-forme intérieure (114a ; 414a) de constitution de veine et une partie formant des becquets ou crochets (115a, 115b ; 415a, 415b), la plate-forme intérieure de constitution de veine ainsi que les becquets ou crochets s'étendant d'un côté et de l'autre de la pale (18) et les becquets ou crochets étant situés du côté intérieur de la plate-forme intérieure de constitution de veine.

8. Procédé selon l'une quelconque des revendications 1 à 6, **caractérisé en ce que** chaque aube (612) est réalisée avec une plate-forme intérieure ayant une partie formant plate-forme intérieure (614a) de constitution de veine, d'un côté de la pale (18), et une partie formant des crochets ou becquets (615a, 615b), de l'autre côté de la pale, et l'assemblage entre deux aubes voisines est réalisé en engageant les crochets ou becquets de l'une des deux aubes du côté intérieur de la plate-forme intérieure de constitution de veine de l'autre des deux aubes.

9. Procédé selon l'une quelconque des revendications 1 à 5, **caractérisé en ce que** :
- l'on réalise des premières aubes (812) ayant chacune une plate-forme intérieure formant plate-forme intérieure (814a) de constitution de veine, une plate-forme extérieure et une pale (18) s'étendant entre les plates-formes intérieure et extérieure et solidaire de celles-ci,
- l'on réalise des deuxièmes aubes (812₂) ayant chacune une plate-forme intérieure formant becquets ou crochets (815a, 815b), une plate-forme extérieure et une pale s'étendant entre les plates-formes intérieure et extérieure et solidaire de celles-ci, et
- l'on forme un secteur en assemblant des premières aubes en alternance avec des deuxièmes aubes, les crochets ou becquets d'une deuxième aube étant engagés du côté intérieur de la plate-forme intérieure de constitution de veine d'une première aube.

10. Procédé selon l'une quelconque des revendications 1 à 9, **caractérisé en ce que** dans la direction longitudinale de l'ébauche correspondant à la direction longitudinale d'une aube à réaliser, l'ébauche fibreuse est tissée avec :
- un premier ensemble (102 ; 402 ; 602 ; 802) de plusieurs couches de fils qui sont liées entre elles au moins partiellement pour former une première partie de l'ébauche destinée à former la préforme de pale, et
- un deuxième ensemble (104 ; 404 ; 604 ; 804) de plusieurs couches de fils qui sont liées entre elles au moins partiellement pour former une deuxième partie de l'ébauche destinée à former la préforme de plate-forme intérieure et pour former une troisième partie de l'ébauche destinée à former la préforme de plate-forme extérieure,
- les fils du premier ensemble de couches de fils n'étant pas liés aux fils du deuxième ensemble de couches de fils, et
- le premier ensemble de couches de fils étant traversé par le deuxième ensemble de couches de fils en des premier et deuxième emplacements de traversée correspondant aux emplacements des préformes de plate-forme intérieure et de plate-forme extérieure, respectivement.

11. Procédé la revendication 10, **caractérisé en ce qu'**il comprend la réalisation d'aubes (112) ayant une plate-forme extérieure avec une partie formant plate-forme extérieure (115a) de constitution de veine et une partie formant des pattes d'accrochage (117a, 117b) situées du côté extérieur de la plate-forme extérieure de constitution de veine, et **en ce que**, dans ladite direction longitudinale, l'ébauche fibreuse (100) est tissée avec, en outre :
- un troisième ensemble (104) de couches de fils qui sont liées entre elles au moins partiellement pour former une quatrième partie de l'ébauche correspondant à une préforme de pattes d'accrochage,
- les fils du premier ensemble de couches de fils n'étant pas liés aux fils du troisième ensemble de couches de fils, et
- le premier ensemble de couches de fils est traversé par le troisième ensemble de couches de fils en un troisième emplacement de traversée correspondant à un emplacement de préforme de pattes d'accrochage.

12. Procédé selon la revendication 11, **caractérisé en ce qu'**il comprend la réalisation d'aubes (112) ayant une plate-forme intérieure avec une partie formant plate-forme intérieure (114a) de constitution de veine et une partie formant des crochets ou becquets (115a, 115b) situés du côté intérieur de la plate-forme intérieure de constitution de veine, et **en ce que** :
- les couches de fils du troisième ensemble (104) de couches de fils sont au moins partiellement liées entre elles pour former une cinquième partie de l'ébauche fibreuse correspondant à une préforme de crochets ou becquets, et
- le premier ensemble de couches de fils est en outre traversé par le troisième ensemble de couches de fils en un quatrième emplacement de traversée correspondant à un emplacement de préforme de crochets ou becquets.

13. Procédé selon la revendication 10, **caractérisé en ce qu'**il comprend la réalisation d'aubes (412) ayant une plate-forme extérieure avec une partie formant plate-forme extérieure (416a) de constitution de veine et une partie formant des pattes d'accrochage (417a, 417b) situées du côté extérieur de la plate-forme extérieure de constitution de veine, et **en ce que** :
- l'ébauche fibreuse (400) est tissée en ménageant une zone de déliaison (407) au sein du premier ensemble (402) de couches de fils, dans le prolongement de la première partie de l'ébauche, vers l'extérieur par rapport au deuxième emplacement de traversée, et
- la mise en forme de l'ébauche comprend le déploiement de parties (407a, 407b) du premier ensemble de couches de fils situées de part et d'autre de la zone de déliaison pour former une préforme de pattes d'accrochage.

14. Procédé selon la revendication 13, **caractérisé en ce qu'**il comprend la réalisation d'aubes (412) ayant une plate-forme intérieure avec une partie formant plate-forme intérieure (414a) de constitution de veine et une partie formant des crochets ou becquets (415a, 415b) situés du côté intérieur de la plate-forme intérieure de constitution de veine, et **en ce que** :
- l'ébauche fibreuse est tissée en ménageant une deuxième zone de déliaison (405) au sein du premier ensemble (402) de couches de fils, dans le prolongement de la première partie de l'ébauche, vers l'intérieur par rapport au premier emplacement de traversée, et
- la mise en forme de l'ébauche comprend le déploiement de parties (405a, 405b) du premier ensemble de couches de fils situées de part et d'autre de la deuxième zone de déliaison pour former une préforme de crochets ou becquets.

15. Procédé selon la revendication 10, **caractérisé en ce qu'**il comprend la réalisation d'aubes (612) ayant une plate-forme extérieure avec une partie formant plate-forme extérieure (616a) de constitution de veine et une partie formant des pattes d'accrochage (617a, 617b) situées du côté extérieur de la plate-forme extérieure de constitution de veine, et **en ce que** :
- au deuxième emplacement de traversée du premier ensemble (602) de couches de fils par le deuxième ensemble (604) de couches de fils, les sorties de la traversée sur deux faces opposées du premier ensemble de couches de fils sont décalées l'une par rapport à l'autre dans la direction longitudinale de l'ébauche, et
- la mise en forme de l'ébauche comprend le déploiement de parties du deuxième ensemble de couches de fils s'étendant à partir de chaque sortie de traversée sur lesdites faces opposées du premier ensemble de couches de fils pour former respectivement une préforme de plate-forme extérieure de constitution de veine et une préforme de pattes d'accrochage décalées l'une par rapport à l'autre en direction longitudinale.

16. Procédé selon la revendication 15, **caractérisé en ce qu'**il comprend la réalisation d'aubes (612) ayant une plate-forme intérieure avec une partie formant plate-forme intérieure (614a) de constitution de veine et une partie formant des crochets ou becquets (615a, 615b) situés du côté intérieur de la plate-forme intérieure de constitution de veine, et **en ce que** :
- au premier emplacement de traversée du premier ensemble (602) de couches de fils par le deuxième ensemble (604) de couches de fils, les sorties de la traversée sur deux faces opposées du premier ensemble de couches de fils sont décalées l'une par rapport à l'autre dans la direction longitudinale de l'ébauche, et
- la mise en forme de l'ébauche comprend le déploiement de parties du deuxième ensemble de couches de fils s'étendant à partir de chaque sortie de traversée du premier emplacement de traversée sur lesdites faces opposées du premier ensemble de couches de fils pour former respectivement une préforme de plate-forme intérieure de constitution de veine et une préforme de crochets ou becquets décalées l'une par rapport à l'autre en direction longitudinale.

17. Turbine de turbomachine ayant un carter de turbine (40) et au moins un distributeur de turbine (10) en matériau composite à matrice céramique, **caractérisée en ce que** le distributeur de turbine comprend des secteurs de distributeur (12) obtenus par le procédé de l'une quelconque des revendications 1 à 16.

18. Turbine selon la revendication 17, **caractérisée en ce que** le distributeur de turbine (10) comprend des secteurs de distributeur obtenus par un procédé selon l'une quelconque des revendications 11 à 16 et est monté dans le carter de turbine (40) au moyen des pattes d'accrochage (17a, 17b).

19. Turbine selon la revendication 17 ou la revendication 18, **caractérisée en ce que** le distributeur de turbine (10) comprend des secteurs de distributeur (12) obtenus par un procédé selon l'une quelconque des revendications 12, 14 et 16 et supporte un anneau (50) support de matériau abradable par l'intermédiaire de crochets (15a, 15b) situés du côté intérieur des plates-formes intérieures de constitution de veine.

20. Compresseur de turbomachine ayant un carter de compresseur (1040) et au moins un redresseur de compresseur (1010) en matériau composite, **caractérisé en ce que** le redresseur de compresseur comprend des secteurs de redresseur (1012) obtenus par un procédé selon l'une quelconque des revendications 1 à 16.

21. Compresseur selon la revendication 20, **caractérisé en ce que** le redresseur de compresseur (1010) comprend des secteurs de redresseur (1012) obtenus par un procédé selon l'une quelconque des revendications 11 à 16 et est monté dans le carter de compresseur (1040) au moyen des pattes d'accrochage (1017a, 1017b).

22. Compresseur selon la revendication 20 ou la revendication 21, **caractérisé en ce que** le redresseur de compresseur (1010) comprend des secteurs de redresseurs (1012) obtenus par un procédé selon l'une quelconque des revendications 12, 14 et 16 et supporte un anneau (1050) support de matériau abradable par l'intermédiaire de crochets (1015a, 1015b) situés du côté intérieur des plates-formes intérieures de constitution de veine.

23. Turbomachine ayant une turbine selon l'une quelconque des revendications 17 à 19 et/ou un compresseur selon l'une quelconque des revendications 20 à 22.

## Patentansprüche

1. Verfahren zur Herstellung eines Sektors (12; 1012) eines Leitrades einer Turbine oder eines Leitapparates eines Turbomaschinenverdichters aus Verbundwerkstoff, umfassend:
- die Herstellung von einblättrigen Einzelschaufeln (112; 412; 612; 812₁, 812₂) eines Turbinenleitrades oder eines Verdichterleitapparates, die jeweils eine innere Plattform (114; 414; 614; 814a, 815a), eine äußere Plattform (116; 416; 616; 816a, 817a) und ein Blatt (18), das sich zwischen der inneren und der äußeren Plattform erstreckt und mit diesen fest verbunden ist, aufweisen, wobei die Herstellung einer jeden Leitradschaufel umfasst:
• die Herstellung eines einstückigen Faserrohlings (100; 400; 600; 800) durch dreidimensionales Weben,
• das Informbringen des Faserrohlings, um einen einstückigen Faservorformling (200; 500; 700; 900), welcher einen einen Blatt-Vorformling bildenden ersten Teil, einen einen inneren Plattform-Vorformling bildenden zweiten Teil und einen einen äußeren Plattform-Vorformling bildenden dritten Teil aufweist, zu erhalten, und
• die teilweise Verdichtung des Vorformlings durch eine Matrix, um eine Schaufel aus Verbundwerkstoff zu erhalten, die eine durch den Vorformling gebildete und durch die Matrix verdichtete Faserverstärkung aufweist und die mit den integrierten inneren und äußeren Plattformen ein einziges Stück bildet,
- die Bearbeitung der Schaufel und
- das Zusammenfügen und Verbinden von mehreren Schaufeln untereinander, um einen mehrblättrigen Sektor eines Turbinenleitrades oder Verdichterleitapparates aus Verbundwerkstoff zu bilden, wobei das Verbinden durch einen Prozess vollzogen wird, der wenigstens einen Schritt zum Verbinden von Schaufeln, die in einem Verdichtungszwischenstadium zusammengefügt werden, durch gemeinsames Verdichten durch eine Matrix umfasst.

2. Verfahren nach Anspruch 1, für die Herstellung eines Sektors eines Leitrades einer Turbine oder eines Leitapparates eines Verdichters aus Keramikmatrix-Verbundwerkstoff, **dadurch gekennzeichnet, dass** das Zusammenfügen der bearbeiteten Schaufeln einen präkeramischen Klebeschritt umfasst.

3. Verfahren nach Anspruch 1 oder 2, **dadurch gekennzeichnet, dass** die äußere (116a; 416a; 616a; 816a) oder innere (114a; 414a; 614a; 814a) Plattform einer ersten Schaufel eine äußere oder innere Plattform zur Bildung eines Kanals umfasst und mit einer äußeren oder inneren Plattform einer benachbarten zweiten Schaufel wenigstens teilweise entlang wenigstens eines Verbindungsbereiches, welcher sich über einen Teil der Außenfläche der äußeren Kanalbildungsplattform der ersten Schaufel und/oder über einen Teil der Innenfläche der inneren Kanalbildungsplattform der ersten Schaufel erstreckt, verbunden ist.

4. Verfahren nach einem der Ansprüche 1 bis 3, **dadurch gekennzeichnet, dass** jede Schaufel mit einer äußeren Plattform (116; 416), die einen eine äußere Plattform (116a; 416a) zur Kanalbildung bildenden Teil und einen Einhaklaschen (117a; 117b; 417a; 417b) bildenden Teil aufweist, ausgebildet ist, wobei die äußere Kanalbildungsplattform sowie die Einhaklaschen sich auf der einen und der anderen Seite des Blattes (18) erstrecken und die Einhaklaschen außerhalb der äußeren Kanalbildungsplattform gelegen sind.

5. Verfahren nach einem der Ansprüche 1 bis 3, **dadurch gekennzeichnet, dass** jede Schaufel (612) mit einer äußeren Plattform, die einen eine äußere Plattform (616a) zur Kanalbildung bildenden Teil auf einer Seite des Blattes (18) und einen Einhaklaschen (617a, 617b) bildenden Teil auf der anderen Seite des Blattes aufweist, ausgebildet ist, und das Zusammenfügen zwischen zwei benachbarten Schaufeln dadurch vollzogen wird, dass die Einhaklaschen von einer der beiden Schaufeln auf der Außenseite der äußeren Kanalbildungsplattform der anderen der beiden Schaufeln angesetzt werden.

6. Verfahren nach einem der Ansprüche 1 bis 3, **dadurch gekennzeichnet, dass**:
- erste Schaufeln (812), die jeweils eine innere Plattform, eine eine äußere Kanalbildungsplattform bildende äußere Plattform (816a) und ein Blatt (18), welches sich zwischen der inneren und der äußeren Plattform erstreckt und mit diesen fest verbunden ist, aufweisen, hergestellt werden,
- zweite Schaufeln, die jeweils eine innere Plattform, eine Einhaklaschen (817a, 817b) bildende äußere Plattform und ein Blatt (18), welches sich zwischen der inneren und der äußeren Plattform erstreckt und mit diesen fest verbunden ist, aufweisen, hergestellt werden, und
- ein Sektor dadurch gebildet wird, dass erste Schaufeln abwechselnd mit zweiten Schaufeln zusammengefügt werden, wobei die Einhaklaschen einer zweiten Schaufel auf der Außenseite der äußeren Kanalbildungsplattform einer ersten Schaufel angesetzt werden.

7. Verfahren nach einem der Ansprüche 1 bis 6, **dadurch gekennzeichnet, dass** jede Schaufel (112; 412) mit einer inneren Plattform, die einen eine innere Plattform (114a; 414a) zur Kanalbildung und einen Ansätze oder Haken (115a, 115b; 415a, 415b) bildenden Teil aufweist, ausgebildet ist, wobei die innere Kanalbildungsplattform sowie die Ansätze oder Haken sich auf der einen und der anderen Seite des Blattes (18) erstrecken und wobei die Ansätze oder Haken auf der Innenseite der inneren Kanalbildungsplattform gelegen sind.

8. Verfahren nach einem der Ansprüche 1 bis 6, **dadurch gekennzeichnet, dass** jede Schaufel (612) mit einer inneren Plattform, die einen eine innere Plattform (614a) zur Kanalbildung bildenden Teil auf einer Seite des Blattes (18) und einen Haken oder Ansätze (615a, 615b) bildenden Teil auf der anderen Seite des Blattes aufweist, ausgebildet ist, und das Zusammenfügen zwischen zwei benachbarten Schaufeln dadurch vollzogen wird, dass die Haken oder Ansätze von einer der beiden Schaufeln auf der Innenseite der inneren Kanalbildungsplattform der anderen der beiden Schaufeln angesetzt werden.

9. Verfahren nach einem der Ansprüche 1 bis 5, **dadurch gekennzeichnet, dass**:
- erste Schaufeln (812), die jeweils eine eine innere Plattform (814a) zur Kanalbildung bildende innere Plattform, eine äußere Plattform und ein Blatt (18), welches sich zwischen der inneren und der äußeren Plattform erstreckt und mit diesen fest verbunden ist, aufweisen, hergestellt werden,
- zweite Schaufeln (812₂), die jeweils eine Ansätze oder Haken (815a, 815b) bildende innere Plattform, eine äußere Plattform und ein Blatt, welches sich zwischen der inneren und der äußeren Plattform erstreckt und mit diesen fest verbunden ist, aufweisen, hergestellt werden, und
- ein Sektor dadurch gebildet wird, dass erste Schaufeln abwechselnd mit zweiten Schaufeln zusammengefügt werden, wobei die Haken oder Ansätze einer zweiten Schaufel auf der Innenseite der inneren Kanalbildungsplattform einer ersten Schaufel angesetzt werden.

10. Verfahren nach einem der Ansprüche 1 bis 9, **dadurch gekennzeichnet, dass** in der Längsrichtung des Rohlings, welche der Längsrichtung einer herzustellenden Schaufel entspricht, der Faserrohling gewebt ist mit:
- einer ersten Anordnung (102; 402; 602; 802) von mehreren Fadenlagen, die wenigstens teilweise untereinander verbunden sind, um einen ersten Teil des Rohlings zu bilden, welcher dazu bestimmt ist, den Blatt-Vorformling zu bilden, und
- einer zweiten Anordnung (104; 404; 604; 804) von mehreren Fadenlagen, die wenigstens teilweise untereinander verbunden sind, um einen zweiten Teil des Rohlings zu bilden, welcher dazu bestimmt ist, den inneren Plattform-Vorformling zu bilden, und um einen dritten Teil des Rohlings zu bilden, welcher dazu bestimmt ist, den äußern Plattform-Vorformling zu bilden,
- wobei die Fäden der ersten Anordnung von Fadenlagen nicht mit den Fäden der zweiten Anordnung von Fadenlagen verbunden sind, und
- wobei die erste Anordnung von Fadenlagen von der zweiten Anordnung von Fadenlagen an einer ersten und einer zweiten Durchquerungsstelle, die den Stellen des inneren Plattform-Vorformlings bzw. äußeren Plattform-Vorformlings entsprechen, durchquert ist.

11. Verfahren nach Anspruch 10, **dadurch gekennzeichnet, dass** es die Herstellung von Schaufeln (112) umfasst, die eine äußere Plattform mit einem Teil, welcher eine äußere Plattform (115a) zur Kanalbildung bildet, und einem Teil, welcher auf der Außenseite der äußeren Kanalbildungsplattform gelegene Einhaklaschen (117a, 117b) bildet, aufweisen, und dass in der Längsrichtung der Faserrohling (100) ferner gewebt ist mit:
- einer dritten Anordnung (104) von Fadenlagen, die wenigstens teilweise untereinander verbunden sind, um einen vierten Teil des Rohlings, der einem Einhaklaschen-Vorformling entspricht, zu bilden,
- wobei die Fäden der ersten Anordnung von Fadenlagen nicht mit den Fäden der dritten Anordnung von Fadenlagen verbunden sind, und
- wobei die erste Anordnung von Fadenlagen von der dritten Anordnung von Fadenlagen an einer dritten Durchquerungsstelle, die einer Stelle des Einhaklaschen-Vorformlings entspricht, durchquert ist.

12. Verfahren nach Anspruch 11, **dadurch gekennzeichnet, dass** es die Herstellung von Schaufeln (112) umfasst, die eine innere Plattform mit einem Teil, welcher eine innere Plattform (114a) zur Kanalbildung bildet, und einem Teil, welcher auf der Innenseite der inneren Kanalbildungsplattform gelegene Haken oder Ansätze (115a, 115b) bildet, aufweisen, und dass:
- die Fadenlagen der dritten Anordnung (104) von Fadenlagen wenigstens teilweise untereinander verbunden sind, um einen fünften Teil des Faserrohlings, der einem Haken- oder Ansatz-Vorformling entspricht, zu bilden, und
- wobei die erste Anordnung von Fadenlagen ferner von der dritten Anordnung von Fadenlagen an einer vierten Durchquerungsstelle, die einer Stelle des Haken- oder Ansatz-Vorformlings entspricht, durchquert ist.

13. Verfahren nach Anspruch 10, **dadurch gekennzeichnet, dass** es die Herstellung von Schaufeln (412) umfasst, die eine äußere Plattform mit einem Teil, welcher eine äußere Plattform (416a) zur Kanalbildung bildet, und einem Teil, welcher auf der Außenseite der äußeren Kanalbildungsplattform gelegene Einhaklaschen (417a, 417b) bildet, aufweisen, und dass:
- der Faserrohling (400) unter Aussparen eines Losbindungsbereiches (407) innerhalb der ersten Anordnung (402) von Fadenlagen, in der Verlängerung des ersten Teils des Rohlings, in Bezug auf die zweite Durchquerungsstelle nach außen, gewebt ist, und
- das Informbringen des Rohlings das Auseinanderfalten von Teilen (407a, 407b) der ersten Anordnung von Fadenlagen, die auf beiden Seiten des Losbindungsbereiches gelegen sind, umfasst, um einen Einhaklaschen-Vorformling zu bilden.

14. Verfahren nach Anspruch 13, **dadurch gekennzeichnet, dass** es die Herstellung von Schaufeln (412) umfasst, die eine innere Plattform mit einem Teil, welcher eine innere Plattform (414a) zur Kanalbildung bildet, und einem Teil, welcher auf der Innenseite der inneren Kanalbildungsplattform gelegene Haken oder Ansätze (415a, 415b) bildet, aufweisen, und dass:
- der Faserrohling unter Aussparen eines zweiten Losbindungsbereiches (405) innerhalb der ersten Anordnung (402) von Fadenlagen, in der Verlängerung des ersten Teils des Rohlings, in Bezug auf die erste Durchquerungsstelle nach innen, gewebt ist, und
- das Informbringen des Rohlings das Auseinanderfalten von Teilen (405a, 405b) der ersten Anordnung von Fadenlagen, die auf beiden Seiten des zweiten Losbindungsbereiches gelegen sind, umfasst, um einen Haken- oder Ansatz-Vorformling zu bilden.

15. Verfahren nach Anspruch 10, **dadurch gekennzeichnet, dass** es die Herstellung von Schaufeln (612) umfasst, die eine äußere Plattform mit einem Teil, welcher eine äußere Plattform (616a) zur Kanalbildung bildet, und einem Teil, welcher auf der Außenseite der äußeren Kanalbildungsplattform gelegene Einhaklaschen (617a, 617b) bildet, aufweisen, und dass:
- an der zweiten Durchquerungsstelle der ersten Anordnung (602) von Fadenlagen durch die zweite Anordnung (604) von Fadenlagen die Ausgänge der Durchquerung an zwei gegenüberliegenden Seiten der ersten Anordnung von Fadenlagen in der Längsrichtung des Rohlings zueinander versetzt sind, und
- das Informbringen des Rohlings das Auseinanderfalten von Teilen der zweiten Anordnung von Fadenlagen, die sich von jedem Durchquerungsausgang an den gegenüberliegenden Seiten der ersten Anordnung von Fadenlagen erstrecken, umfasst, um einen äußeren Kanalbildungsplattform-Vorformling bzw. einen Einhaklaschen-Vorformling, welche in Längsrichtung zueinander versetzt sind, zu bilden.

16. Verfahren nach Anspruch 15, **dadurch gekennzeichnet, dass** es die Herstellung von Schaufeln (612) umfasst, die eine innere Plattform mit einem Teil, welcher eine innere Plattform (614a) zur Kanalbildung bildet, und einem Teil, welcher auf der Innenseite der inneren Kanalbildungsplattform gelegene Haken oder Ansätze (615a, 615b) bildet, aufweisen, und dass:
- an der ersten Durchquerungsstelle der ersten Anordnung (602) von Fadenlagen durch die zweite Anordnung (604) von Fadenlagen die Ausgänge der Durchquerung an zwei gegenüberliegenden Seiten der ersten Anordnung von Fadenlagen in der Längsrichtung des Rohlings zueinander versetzt sind, und
- das Informbringen des Rohlings das Auseinanderfalten von Teilen der zweiten Anordnung von Fadenlagen, die sich von jedem Durchquerungsausgang der ersten Durchquerungsstelle an den gegenüberliegenden Seiten der ersten Anordnung von Fadenlagen erstrecken, umfasst, um einen inneren Kanalbildungsplattform-Vorformling bzw. einen Haken- oder Ansatz-Vorformling, welche in Längsrichtung zueinander versetzt sind, zu bilden.

17. Turbine einer Turbomaschine, die ein Turbinengehäuse (40) und wenigstens ein Turbinenleitrad (10) aus Keramikmatrix-Verbundwerkstoff aufweist, **dadurch gekennzeichnet, dass** das Turbinenleitrad Leitradsektoren (12), welche durch das Verfahren von einem der Ansprüche 1 bis 16 erhalten werden, umfasst.

18. Turbine nach Anspruch 17, **dadurch gekennzeichnet, dass** das Turbinenleitrad (10) Leitradsektoren, welche durch ein Verfahren nach einem der Ansprüche 11 bis 16 erhalten werden, umfasst und in dem Turbinengehäuse (40) mittels Einhaklaschen (17a, 17b) montiert ist.

19. Turbine nach Anspruch 17 oder Anspruch 18, **dadurch gekennzeichnet, dass** das Turbinenleitrad (10) Leitradsektoren (12), welche durch ein Verfahren nach einem der Ansprüche 12, 14 und 16 erhalten werden, umfasst und einen Tragring (50) aus Abriebmaterial mittels Haken (15a, 15b), welche auf der Innenseite der inneren Kanalbildungsplattformen gelegen sind, trägt.

20. Verdichter einer Turbomaschine, der ein Verdichtergehäuse (1040) und wenigstens einen Verdichterleitapparat (1010) aus Verbundwerkstoff aufweist, **dadurch gekennzeichnet, dass** der Verdichterleitapparat Leitapparatsektoren (1012), die durch ein Verfahren nach einem der Ansprüche 1 bis 16 erhalten werden, umfasst.

21. Verdichter nach Anspruch 20, **dadurch gekennzeichnet, dass** der Verdichterleitapparat (1010) Leitapparatsektoren (1012), welche durch ein Verfahren nach einem der Ansprüche 11 bis 16 erhalten werden, umfasst und in dem Verdichtergehäuse (1040) mittels Einhaklaschen (1017a, 1017b) montiert ist.

22. Verdichter nach Anspruch 20 oder Anspruch 21, **dadurch gekennzeichnet, dass** der Verdichterleitapparat (1010) Leitapparatsektoren (1012), welche durch ein Verfahren nach einem der Ansprüche 12, 14 und 16 erhalten werden, umfasst und einen Tragring (1050) aus Abriebmaterial mittels Haken (1015a, 1015b), welche auf der Innenseite der inneren Kanalbildungsplattformen gelegen sind, trägt.

23. Turbomaschine, die eine Turbine nach einem der Ansprüche 17 bis 19 und/oder einen Verdichter nach einem der Ansprüche 20 bis 22 aufweist.

## Claims

1. A method of fabricating a sector (12; 1012) out of composite material for a turbine nozzle or a compressor diffuser of a turbine engine, the method comprising:
• making single-airfoil unit vanes (112; 412; 612; 812₁, 812₂) for a turbine nozzle or a compressor diffuser, each having an inner platform (114; 414; 614; 814a, 815a), an outer platform (116; 416; 616; 816a, 817a), and an airfoil (18) extending between the inner and outer platforms and secured thereto, each nozzle or diffuser vane being made by:
· making a single-piece fiber blank (100; 400; 600; 800) by three-dimensional weaving;
· shaping the fiber blank to obtain a single-piece fiber preform (200; 500; 700; 900) having a first portion forming an airfoil preform, a second portion forming an inner platform preform, and a third portion forming an outer platform preform; and
· partially densifying the preform with a matrix to obtain a composite material vane having fiber reinforcement formed by the preform and densified by the matrix, and forming a single piece with inner and outer platforms incorporated therein; and
• machining the vane,
• assembling and bonding together a plurality of vanes to form a composite material multi-airfoil sector of a turbine nozzle or a compressor diffuser, the bonding being performed by a process including at least one step of bonding by co-densifying with a common matrix vanes that have already been assembled together while at an intermediate stage of densification.

2. A method according to claim 1 for making a turbine nozzle or compressor diffuser sector out of ceramic matrix composite material, the method being **characterized in that** assembling the machined vanes comprises a step of pre-ceramic adhesive bonding.

3. A method according to claim 1 or claim 2, **characterized in that** the outer or inner platform (116a; 416a; 616a; 816a; or 114a; 414a; 614a; 814a) of a first vane comprises an outer or inner passage-constituting platform and is connected to an outer or inner platform of an adjacent second vane at least in part along at least one bonding zone extending over a portion of the outside surface of the outer passage-constituting platform of the first vane and/or over a portion of the inside surface of the inner passage-constituting platform of the first vane.

4. A method according to any one of claims 1 to 3, **characterized in that** each vane is made with an outer platform (116; 416) having a portion forming an outer passage-constituting platform (116a; 416a) and a portion forming attachment tabs (117a; 117b; 417a; 417b), the outer passage-constituting platform and the attachment tabs extending on both sides of the airfoil (18) and the attachment tabs being situated on the outside of the outer passage-constituting platform.

5. A method according to any one of claims 1 to 3, **characterized in that** each vane (616) is made with an outer platform having a portion forming an outer passage-constituting platform (616a) on one side of the airfoil (18), and a portion forming attachment tabs (617a, 617b) on the other side of the airfoil, and two adjacent vanes are assembled by engaging the attachment tabs of one of the two vanes on the outside of the outer passage-constituting platform of the other one of the two vanes.

6. A method according to any one of claims 1 to 3, **characterized by** the following steps:
• making first vanes (812), each having an inner platform, an outer platform (816a) forming an outer passage-constituting platform, and an airfoil (18) extending between the inner and outer platforms and secured thereto;
• making second vanes, each having an inner platform, an outer platform forming attachment tabs (817a, 817b) and an airfoil (18) extending between the inner and outer platforms and secured thereto; and
• forming a sector by assembling first vanes in alternation with second vanes, the attachment tabs of a second vane being engaged on the outside of the outer passage-constituting platform of a first vane.

7. A method according to any one of claims 1 to 6, **characterized in that** each vane (112; 412) is made with an inner platform having a portion (114a; 414a) forming an inner passage-constituting platform and a portion (115a, 115b; 415a, 415b) forming ribs or hooks, the inner passage-constituting platform and the ribs or hooks extending on both sides of the airfoil (18) and the ribs or hooks being situated on the inside of the inner passage-constituting platform.

8. A method according to any one of claims 1 to 6, **characterized in that** each vane (612) is made with an inner platform having a portion (614a) forming an inner passage-constituting platform on one side of the airfoil (18), and a portion (615a, 615b) forming hooks or ribs on the other side of the airfoil, and two adjacent vanes being assembled together by engaging the hooks or ribs of one of the two vanes on the inside of the inner passage-constituting platform of the other one of the two vanes.

9. A method according to any one of claims 1 to 5, **characterized by** the following steps:
• making first vanes (812), each having an inner platform forming an inner passage-constituting platform (814a), an outer platform, and an airfoil (18) extending between the inner and outer platforms and secured thereto;
• making second vanes (812₂), each having an inner platform forming ribs or hooks (815a, 815b), an outer platform, and an airfoil extending between the inner and outer platforms and secured thereto; and
• forming a sector by assembling first vanes in alternation with second vanes, the hooks or ribs of a second vane being engaged on the inside of the passage-constituting inner platform of a first vane.

10. A method according to any one of claims 1 to 9, **characterized in that** the fiber blank is woven with the longitudinal direction of the blank corresponding to the longitudinal direction of the vane to be made, the fiber blank being woven in said direction with:
• a first set (102; 402; 602; 802) of a plurality of yarn layers that are interlinked at least in part to form a first portion of the blank that is to form the airfoil preform; and
• a second set (104; 404; 604; 804) of a plurality of yarn layers that are interlinked at least in part to form a second portion of the blank that is to form the inner platform preform and to form a third portion of the blank that is to form the outer platform preform;
• the yarns of the first set of yarn layers not being interlinked with the yarns of the second set of yarn layers; and
• the first set of yarn layers being crossed by the second set of yarn layers at first and second crossing locations corresponding respectively to the locations of the preforms for the inner and outer platforms.

11. A method according to claim 10, **characterized in that** it comprises making vanes (112) having an outer platform with a portion (115a) forming a passage-constituting outer platform and a portion (117a, 117b) forming attachment tabs situated on the outside of the passage-constituting outer platform, and **in that**, in said longitudinal direction, the fiber blank (100) is also woven with:
• a third set (104) of yarn layers that are interlinked at least in part to form a fourth portion of the blank corresponding to an attachment tab preform;
• the yarns of the first set of yarn layers not being interlinked with the yarns of the third set of yarn layers; and
• the first set of yarn layers is crossed by the third set of yarn layers at a third crossing location corresponding to an attachment tab preform location.

12. A method according to claim 11, **characterized in that** it comprises making vanes (112) having an inner platform with a portion (114a) forming an inner passage-constituting platform and a portion (115a, 115b) forming hooks or ribs situated on the inside of the inner passage-constituting platform, and **in that**:
• the yarn layers of the third set (104) of yarn layers are interlinked at least in part to form a fifth portion of the fiber blank corresponding to a hook or rib preform; and
• the first set of yarn layers is also crossed by the third set of yarn layers at a fourth crossing location corresponding to a hook or rib preform location.

13. A method according to claim 10, **characterized in that** it comprises making vanes (412) having an outer platform with a portion (416a) forming an outer passage-constituting platform and a portion (417a, 417b) forming attachment tabs situated on the outside of the outer passage-constituting platform, and **in that**:
• the fiber blank (400) is woven while providing a zone (407) of non-interlinking within the first set (402) of yarn layers in an extension of the first portion of the blank on the outside relative to the second crossing location; and
• the shaping of the blank comprises deploying the portions (407a, 407b) of the first set of yarn layers situated on either side of the zone of non-interlinking in order to form an attachment tab preform.

14. A method according to claim 13, **characterized in that** it comprises making vanes (412) having an inner platform with a portion (414a) forming an inner passage-constituting platform and a portion (415a, 415b) forming hooks or ribs situated on the inside of the inner passage-constituting platform, and **in that**:
• the fiber blank is woven while leaving a second zone (405) of non-interlinking within the first set (402) of yarn layers extending the first portion of the blank towards the inside from the first crossing location; and
• the shaping of the blank comprises deploying the portions (405a, 405b) of the first set of yarn layers situated on either side of the second zone of non-interlinking in order to from a hook or rib preform.

15. A method according to claim 10, **characterized in that** it comprises making vanes (612) having an outer platform with a portion (616a) forming an outer passage-constituting platform and a portion (617a, 617b) forming attachment tabs situated on the outside of the outer passage-constituting platform, and **in that**:
• at the second crossing location where the first set (602) of yarn layers is crossed by the second set (604) of yarn layers, the outlets of the crossing in two opposite faces of the first set of yarn layers are offset from each other in the longitudinal direction of the blank; and
• the shaping of the blank comprises deploying the portions of the second set of yarn layers extending from each of the crossing outlets in said opposite faces of the first set of yarn layers in order to form respectively a preform for an outer passage-constituting platform and a preform for attachment tabs, which preforms are offset from each other in the longitudinal direction.

16. A method according to claim 15, **characterized in that** it comprises making vanes (612) having an inner platform with a portion (614a) forming an inner passage-constituting platform and a portion (615a, 615b) forming hooks or ribs situated on the inside of the inner passage-constituting platform, and **in that**:
• at the first crossing location where the first set (602) of yarn layers is crossed by the second set (604) of yarn layers, the crossing outlets in two opposite faces of the first set of yarn layers are offset from each other in the longitudinal direction of the blank; and
• the shaping of the blank comprises deploying portions of the second set of yarn layers extending from each crossing outlet of the first crossing location in said opposite faces of the first set of yarn layers to form respectively a preform for an inner passage-constituting platform and a preform for hooks or ribs, which platforms are offset from each other in the longitudinal direction.

17. A turbine for a turbine engine, the turbine having a turbine casing (40) of at least one turbine nozzle (10) made of ceramic matrix composite material, the turbine being **characterized in that** the turbine nozzle comprises nozzle sectors (12) obtained by the method according to any one of claims 1 to 16.

18. A turbine according to claim 17, **characterized in that** the turbine nozzle (10) comprises nozzle sectors obtained by a method according to any one of claims 11 to 16 and is mounted in the turbine casing (40) by means of attachment tabs (17a, 17b).

19. A turbine according to claim 17, **characterized in that** the turbine nozzle (10) comprises nozzle sectors (12) obtained by a method according to any one of claims 12, 14, and 16, and supports an abradable material support ring (50) by means of hooks (15a, 15b) situated on the inside of the inner passage-constituting platforms.

20. A compressor for a turbine engine, the compressor having a compressor casing (1040) and at least one compressor diffuser (1010) made of composite material, the compressor being **characterized in that** the compressor diffuser comprises diffuser sectors (1012) obtained by a method according to any one of claims 1 to 16.

21. A compressor according to claim 20, **characterized in that** the compressor diffuser (1010) comprises diffuser sectors (1012) obtained by a method according to any one of claims 11 to 16 and is mounted in the compressor casing (1040) by means of attachment tabs (1017a, 1017b).

22. A compressor according to claim 20 or claim 21, **characterized in that** the compressor diffuser (1010) comprises diffuser sectors (1012) obtained by a method according to any one of claims 12, 14, and 16, and supports an abradable material support ring (1050) via hooks (1015a, 1015b) situated on the inside of inner passage-constituting platforms.

23. A turbine engine having a turbine according to any one of claims 17 to 19 and/or a compressor according to any one of claims 20 to 22.
